# NEUE EUROPÄISCHE PATENTSCHRIFT

(11) **EP 1 745 270 B2**
(45) Veröffentlichungstag und Bekanntmachung des Hinweises auf die Entscheidung über den Einspruch: **27.03.2019**
(45) Hinweis auf die Patenterteilung: 30.03.2016
(21) Anmeldenummer: 05716458.4
(22) Anmeldetag: 30.03.2005
(51) Int. Cl.: G01N 1/28, G02B 21/00, G06T 1/00, G06K 9/00

(54) **VERFAHREN ZUR BEARBEITUNG EINER MASSE MITTELS LASERBESTRAHLUNG UND STEUERSYSTEM**
METHOD FOR MACHINING A MATERIAL BY USING LASER IRRADIATION, AND CONTROL SYSTEM
PROCEDE DE TRAITEMENT D'UNE MATIERE PAR RAYONNEMENT LASER ET SYSTEME DE COMMANDE APPROPRIE

(30) Priorität: 11.05.2004 DE 102004023262
(43) Veröffentlichungstag der Anmeldung: 24.01.2007
(73) Patentinhaber: Carl Zeiss Microscopy GmbH, 07745 Jena (DE)
(72) Erfinder: SCHÜTZE, Karin, 82327 Tutzing (DE); SÄGMÜLLER, Bernd, 69514 Laudenbach (DE); RHEINGANS, Thomas, 83646 Wackersberg (DE)
(74) Vertreter: Banzer, Hans-Jörg
(86) Internationale Anmeldenummer: PCT/EP2005/003344
(87) Internationale Veröffentlichungsnummer: WO 2005/114135

(56) Entgegenhaltungen:
- EP-A1- 0 014 857
- EP-A1- 1 367 380
- WO-A1-02/29710
- WO-A1-97/13838
- WO-A1-97/29355
- WO-A1-02/084368
- WO-A1-03/036266
- WO-A1-2005/040762
- WO-A1-2005/040762
- WO-A2-97/11156
- DE-C1- 10 043 506
- US-A- 5 428 690
- US-A1- 2002 090 122
- US-A1- 2004 023 320
- US-A1- 2004 093 166
- US-B1- 6 594 586
- ROMER, D. ET AL: "Using a modified standard microscope to generate virtual slides", ANATOMICAL RECORD, vol. 272B, 1 May 2003 (2003-05-01), pages 91-97, XP055338879,
- WONG, M.H. et al.: "Genetic mosaic analysis based on Cre recombinase and navigated laser capture microdissection.", Proc. Natl. Acad. Sci. USA, vol. 97, 2000, pages 12601-12606, XP055338882,
- MESKER, W.E. et al.: "Automated Analysis of Multiple Sections for the Detec- tion of Occult Cells in Lymph Nodes.", Clin. Cancer Res., vol. 9, 2003, pages 4826-4834, XP055338885,
- MOULÉDOUS L. et al.: "Navigated laser capture microdissection as an alternati- ve to direct histological staining for proteomic analysis of brain samples.", Proteomics, vol. 3, no. 5, 2003, pages 610-615, XP055338886,
- STREICHER, J. et al.: "External Marker-Based Automatic Congruencing. A New Method of 3D Reconstruction from Serial Sections.", Anatom. Rec., vol. 248, no. 4, 1997, pages 583-602, XP009029310,
- ONGARO, I. et al.: "Fiducial Points for Three-Dimensional Computer-Assisted Reconstruction of Serial Light Microscopic Sections of Umbilical Cord.", Anatom . Rec., vol. 229, no. 2, 1991, pages 285-289, XP055338892,
- TARNOK, A. ET AL: "CLINICAL APPLICATIONS OF LASER SCANNING CYTOMETRY", CYTOMETRY (CLINICAL CYTOMETRY), vol. 50 , pages 133-143,
- DARZYNKIEWICZ, Z. ET AL: "Laser-scanning cytometry: A new instrumentation with many applications", Experimental Cell Research, vol. 249, no. 1, 25 May 1999 (1999-05-25), pages 1-12, XP002302664,

## Beschreibung

Die vorliegende Erfindung betrifft ein Verfahren zur Bearbeitung einer biologischen oder nichtbiologischen Masse nach dem Oberbegriff der Ansprüche 1 und 21 sowie ein Steuersystem für eine Vorrichtung zur Bearbeitung einer biologischen oder nichtbiologischen Masse nach dem Oberbegriff des Anspruches 37. Insbesondere betrifft die vorliegende Erfindung ein Verfahren zur vereinfachten Bearbeitung, Separierung und/oder Gewinnung von mikroskopisch kleinen biologischen und/oder nichtbiologischen Objekten aus einer biologischen oder nichtbiologischen Masse und ein Steuersystem für eine dafür ausgestaltete Vorrichtung.

Für eine Vielzahl von biologischen Untersuchungen ist es erforderlich, einzelne Zellen oder Strukturen aus einem Zellverband, wie etwa einem Gewebe oder einem histologischen Gewebepräparat, zu lösen. Dies kann beispielsweise mit mechanischen Mikrowerkzeugen, z.B. Mikrokapillaren oder Mikronadeln, erfolgen. Eine derartige Vorgehensweise ist jedoch mühsam und es besteht eine Kontaminationsgefahr für die herausgelösten Objekte. Ferner ist ein solches Verfahren kaum zu automatisieren.

In der WO 97/29355 A der Anmelderin wurde daher ein neuartiges Verfahren zum Sortieren und zur Gewinnung von einzelnen biologischen Objekten, die auf einem planaren Träger angeordnet sind, vorgeschlagen. Insbesondere wird vorgeschlagen, ein ausgewähltes biologisches Objekt von der umgebenden weiteren biologischen Masse durch einen Laserstrahl abzutrennen, so dass das ausgewählte biologische Objekt von der weiteren biologischen Masse freipräpariert ist. Das somit freipräparierte biologische Objekt wird anschließend mit Hilfe eines Laserschusses von dem Träger zu einer Auffangvorrichtung katapultierartig transferiert, wobei es sich bei dieser Auffangvorrichtung beispielsweise um ein Auffangsubstrat handeln kann. Als Träger der biologischen Masse kann beispielsweise eine Polymerfolie verwendet werden.

Ein zu separierendes biologisches Objekt einer auf dem Träger aufgebrachten biologischen Masse wird somit zunächst ausgewählt, aus der biologischen Masse ausgeschnitten und anschließend durch einen Laser-induzierten Transportprozess zu der Auffangvorrichtung katapultiert. Unter "biologischen Objekten" werden dabei im Rahmen der vorliegenden Anmeldung vor allem lebende oder fixierte biologische Zellen oder Zellbestandteile verstanden, die Bestandteil eines flüssigen oder festen biologischen Materials, wie beispielsweise eines Zellgewebes, eines Abstriches, einer Zellkultur oder Ähnlichem sind.

Mit Hilfe des zuvor beschriebenen Verfahrens, welches dem Oberbegriff des Anspruches 1 zugrunde liegt, können bestimmte Objekte aus einer biologischen Masse gezielt herausgelöst oder ausgesondert werden. Die biologischen Objekte können nebeneinander auf einem festen planaren Träger aufgebracht sein, wobei der Vorgang des Herauslösens oder Aussonderns innerhalb kurzer Zeit und berührungslos durchgeführt werden kann. Die Überlebensfähigkeit und die Morphologie der biologischen Objekte bleibt erhalten, d.h. die biologischen Objekte werden durch den Abtrennprozess und den Laser-induzierten Transportprozess nicht geschädigt oder beeinträchtigt.

Die Durchführung des oben beschriebenen Verfahrens ist jedoch manuell durchzuführen und dadurch relativ aufwändig. Zudem ist eine hohe Präzision erforderlich, da ein abzutrennendes biologisches Objekt präzise bezüglich des Laserstrahls positioniert werden muss, um ein zuverlässiges Ausschneiden und anschließendes Katapultieren durch einen Laserimpuls bzw. Laserschuss zu erreichen. Ferner müssen in der Regel ähnliche Schneidevorgänge oder Katapultiervorgänge wiederholt mit hoher Genauigkeit durchgeführt werden.

Aus diesem Grund schlägt die WO 01/73398 A der Anmelderin vor, dass das Schneiden und/oder das Katapultieren des Objekts rechnergestützt vorgenommen wird. Dabei ist vorgesehen, dass eine Laserlichtquelle, welche den zum Schneiden und/oder Katapultieren dienenden Laserstrahl erzeugt, automatisch angesteuert wird und die zum Schneiden und/oder Katapultieren erforderliche Relativbewegung zwischen dem Laserstrahl und dem das biologische Objekt aufweisenden Träger ebenfalls automatisch herbeigeführt und gesteuert wird. Insbesondere können mehrere Schneide- und/oder Katapultiervorgänge rechnergestützt, d.h. automatisch, nacheinander durchgeführt werden. Hierdurch kann eine gleichmäßige hohe Präzision für jeden einzelnen Schneide-/Katapultiervorgang gewährleistet werden.

Gemäß diesem Verfahren werden die auszuschneidenden oder katapultierenden Objekte mittels einer Benutzerschnittstelle eines Computer- oder Rechnersystems ausgewählt. Hierfür wird ein Videobild der biologischen oder nichtbiologischen Masse erzeugt und mit der Benutzerschnittstelle des Computersystems überlagert. Eine manuelle Auswahl einer Vielzahl von Objekten durch den Benutzer bedeutet jedoch einen erheblichen Zeitaufwand. Ferner besteht durch die manuelle Auswahl von Objekten ein Risiko, dass diese Auswahl nicht nach objektiven Kriterien erfolgt.

Die WO 2004/025569 A2 beschreibt ein Verfahren zur Bildanalyse im Zusammenhang mit einer Zellklassifikation bei Laser-Mikrodissektionsanwendungen. Hierbei wird eine Abbildung einer Probe erzeugt und automatisch ausgewertet, um darin Bereiche von Interesse, sogenannte "Regions of Interest" (ROIs) zu identifizieren. Die Auswertung geschieht anhand von vorgegebenen Merkmalen, wobei die Identifizierung eines ROI auf drei unterschiedlichen Abstraktionsebenen erfolgen kann. Bei dieser Auswertung werden intrinsische Merkmale von Abbildungsteilen oder Objekten berücksichtigt. Bei diesen intrinsischen Merkmalen kann es sich beispielsweise um eine mittlere Intensität in einem Bildteil oder um Ausdehnungen oder Ausrichtungen eines Objekts handeln.

Der vorliegenden Erfindung liegt die Aufgabe zugrunde, ein vereinfachtes und effektiveres Verfahren zur Bearbeitung einer biologischen oder nichtbiologischen Masse sowie ein Steuersystem für eine entsprechende Vorrichtung vorzuschlagen, womit die zuvor beschriebenen Probleme beseitigt werden und insbesondere ein geringerer Aufwand für den Benutzer und ein zuverlässiges Separieren von Objekten aus der Masse nach objektiven Kriterien gewährleistet sind.

Diese Aufgabe wird erfindungsgemäß durch ein Verfahren mit den Merkmalen des Anspruches 1, sowie ein Steuersystem mit den Merkmalen des Anspruches 32 gelöst. Des Weiteren schlägt die Erfindung eine Vorrichtung zum Bearbeiten einer Masse mit einem Laserstrahl, insbesondere in Form eines Laser-Mikroskop-Systems oder eines Laser-Mikrodissektionssystems, mit den Merkmalen des Anspruches 35 und ein computerlesbares Computerprogrammprodukt mit einem Programmcode zur Durchführung des erfindungsgemäßen Verfahrens mit den Merkmalen des Anspruches 39, wobei es sich dabei insbesondere um einen handelsüblichen Datenträger (Festplatte, CD-ROM, DVD, Diskette etc.) als auch um ein elektronisch lesbares Speichermedium (beispielsweise einen in ein Computersystem integrierten Speicher) handeln kann, vor. Die abhängigen Ansprüche definieren jeweils bevorzugte und vorteilhafte Ausführungsformen der Erfindung.

Die vorliegende Erfindung wird nachfolgend vornehmlich anhand des Schneidens und/oder Transfers biologischer Objekte beschrieben. Die Erfindung ist jedoch ebenso für nichtbiologische Objekte (unbelebte Materie) anwendbar, wobei es sich z.B. um mikroskopisch kleine Objekte aus Glas, Silica, Kunststoff oder künstlich hergestellte Vesikel in einer biologischen Masse handeln kann. Ebenso ist die vorliegende Erfindung auf nichtbiologischen Massen, z.B. Polymermassen oder dergleichen, anwendbar, aus denen mikroskopisch kleine Objekte herausgelöst werden sollen.

Erfindungsgemäß wird das Schneiden der Masse und/oder Transferieren eines Objekts durch Bestrahlung mit einem Laserstrahl durchgeführt. Die Masse befindet sich dabei auf einem Träger, z.B. einem Mikroskoptisch, und das Objekt wird nach dem Katapultieren in einer Auffangvorrichtung aufgefangen. Da der Transfer aufgrund der Bestrahlung mit dem Laserstrahl impulsartig oder katapultierartig erfolgt, wird nachfolgend der Einfachheit halber von einem Katapultieren des jeweils mit dem Laserstrahl bestrahlten Objekts gesprochen.

Ein Grundgedanke der vorliegenden Erfindung besteht darin, in einer Abbildung der Masse Strukturen zu identifizieren oder klassifizieren, welche dann verwendet werden, um automatisch einen Bereich der Masse auszuwählen, in welchem das Schneiden der Masse und/oder das Katapultieren des Objekts erfolgt. Das automatische Identifizieren von Strukturen und Auswählen des Bereichs erfolgt dabei vorzugsweise in einer flexiblen, objektorientierten Weise basierend auf den Beziehungen der Strukturen untereinander. Dies bedeutet, dass Strukturen zunächst auf Basis von Kontrastinformationen der Abbildung, z.B. Farb- oder Helligkeitskontraste, identifiziert werden, zusätzlich jedoch auch eine Hierarchie von Strukturen definiert wird, so dass übergeordnete Strukturen definiert werden, welche untergeordnete Strukturen umfassen. In diesem Fall ist es möglich, die Strukturen auf Basis der jeweils benachbarten, übergeordneten bzw. untergeordneten Strukturen zu identifizieren. Bei dem ausgewählten Bereich kann es sich speziell um eine solche identifizierte Struktur handeln, d.h. der Bereich wird derart ausgewählt, dass im Wesentlichen nur die identifizierte Struktur in ihm enthalten ist.

Diese flexible, objektorientierte Identifizierung von Strukturen bietet gegenüber einer herkömmlichen lediglich auf Kontrastinformationen basierenden Auswertung von Abbildungen den Vorteil, dass eine Strukturhierarchie aufgebaut wird, welche eine deutlich effektivere Erkennung von Strukturen ermöglicht. Für die Identifizierung können Regelsätze definiert werden, so dass die Identifizierung der Strukturen und darauf basierende unter Auswahl des Bereichs nach präzise definierten, objektiven Kriterien erfolgt. Anhand der Regelsätze kann der Identifizierungs- und Auswahlvorgang flexibel gestaltet werden, so dass beispielsweise auch eine Identifizierung lediglich auf Basis von Kontrastinformationen, z.B. Farb- oder Helligkeitskontrasten, möglich ist.

Erfindungsgemäß ist ein Verfahren vorgesehen, gemäß welchem durch Abbildungsmittel eine Abbildung zumindest eines Teils der Masse auf dem Träger erzeugt wird. Die Abbildung wird automatisch ausgewertet, um in der Abbildung vorgegebene Strukturen zu identifizieren. Bei diesen Strukturen kann es sich beispielsweise um Zellkerne, Zellmembranen, ganze Zellen oder Zellgruppen handeln. Basierend auf den identifizierten Strukturen wird automatisch ein Bereich der Abbildung ausgewählt. Anschließend werden geometrische Kenngrößen des ausgewählten Bereichs bestimmt und basierend auf den geometrischen Kenngrößen wird ein Steuersignal zum automatischen Schneiden der Masse und/oder Katapultieren des Objekts erzeugt.

Durch die erfindungsgemäße Vorgehensweise erfolgt eine automatisierte Auswahl eines Bereichs der Abbildung, von welchem dann geometrische Kenngrößen bestimmt werden. Diese geometrischen Kenngrößen umfassen vorzugsweise zunächst eine Position des ausgewählten Bereichs auf dem Träger oder eine bezüglich des Trägers definierte Umfangslinie des ausgewählten Bereichs. Auf Basis der Position bzw. Umfangslinie können dann weitere Kenngrößen ermittelt werden, welche bevorzugt eine Schnittkurve oder einen Zielpunkt umfassen.

Basierend auf den geometrischen Kenngrößen werden Steuersignale zum automatischen Schneiden der Masse und/oder Katapultieren des Objekts erzeugt.

Die genannten Schritte sind durch entsprechend ausgestaltete Bildverarbeitungsmittel und Datenverarbeitungsmittel, beispielsweise in einem Computersystem, durchführbar. Der Aufwand für den Benutzer für das Schneiden der Masse und/oder das Katapultieren des Objekts aus der Masse wird somit erheblich eingeschränkt, da nunmehr keine manuelle Auswahl von Bereichen oder Objekten erforderlich ist. Außerdem kann das Separieren von Objekten aus der Masse nach objektiven Kriterien erfolgen, welche beispielsweise abstrakt in einem Regelsatz definierbar sind.

Erfindungsgemäß wird bei dem Erzeugen des Steuersignals zum automatischen Schneiden der Masse die Schnittkurve basierend auf der Umfangslinie des ausgewählten Bereichs ermittelt. Dies geschieht insbesondere derart, dass die Schnittkurve um mindestens einen vorbestimmten Abstand von der Umfangslinie des ausgewählten Bereichs beabstandet ist und die Umfangslinie des ausgewählten Bereichs umschließt. Hierdurch wird gewährleistet, dass bei dem Schneidevorgang der ausgewählte Bereich der Masse nicht direkt von dem Laserstrahl getroffen wird und somit eine Beschädigung des ausgewählten Bereichs vermieden wird. Dabei ist es speziell weiterhin vorteilhaft, diesen vorbestimmten Abstand abhängig von den identifizierten Strukturen zu wählen, so dass beispielsweise für als besonders empfindlich klassifizierte Strukturen oder Strukturen mit einem ungenau definierten Randbereich automatisch ein größerer Abstand gewählt werden kann.

Das Erzeugen von Steuersignalen zum automatischen Schneiden der Masse und/oder Katapultieren des Objekts kann weiterhin ein automatisches Bestimmen von Steuerparametern einer Laserlichtquelle zum Erzeugen des Laserstrahls umfassen. Hierdurch wird der Gesamtvorgang für den Benutzer weiter vereinfacht, da eine manuelle Einstellung der Steuerparameter, z.B. einer Laserleistung oder einer Pulsdauer, nicht erforderlich ist. Weiterhin ist es möglich, die Steuerparameter an jeweils in Umgebung des ausgewählten Bereichs oder innerhalb des ausgewählten Bereichs identifizierte Strukturen automatisch anzupassen.

Bei der vorliegenden Erfindung erfolgt das Schneiden, indem der Laserstrahl im aktivierten Zustand entlang der Schnittkurve relativ zu der Masse bewegt wird. Hierdurch entsteht in der Masse eine Schnittlinie, welche in der Masse insbesondere ein anschließend zu katapultierendes Objekt vollständig umschließen kann. Es ist jedoch auch möglich, die Schnittlinie nicht vollständig zu schließen, so dass das zu katapultierende Objekt bis zu dem Katapultiervorgang bezüglich der Masse fixiert ist. Die Relativbewegung zwischen der Masse auf dem Träger und dem Laserstrahl wird vorzugsweise durch eine Verstellvorrichtung herbeigeführt, welche durch ein Verstell-Steuersignal angesteuert und verstellt wird. Dieses Verstell-Steuersignal wird auf Basis der berechneten Schnittkurve erzeugt, so dass der Laserstrahl bei dem automatischen Schneiden entlang der Schnittkurve bewegt wird.

Die geometrischen Kenngrößen des ausgewählten Bereichs, welche gemäß dem erfindungsgemäßen Verfahren berechnet werden, können ferner den Zielpunkt umfassen, wobei das Steuersignal der Verstellvorrichtung auf Basis dieses Zielpunkts erzeugt wird, so dass der Laserstrahl zum automatischen Katapultieren auf den Zielpunkt gerichtet ist und bei anschließender Aktivierung des Laserstrahls das Objekt von dem Träger zu der Auffangvorrichtung katapultiert wird. Dieser Zielpunkt kann beispielsweise durch einen geometrischen Mittelpunkt des ausgewählten Bereichs definiert sein oder aber auch auf der berechneten Schnittkurve liegen, wobei in diesem Fall das Schneiden der Masse derart erfolgt, dass die entstehende Schnittlinie an der Position des Zielpunkts nicht geschlossen ist. Der Zielpunkt für den Katapultiervorgang kann demnach automatisch bestimmt werden, wodurch eine präzise Auswahl des Zielpunkts möglich ist und eine hohe Reproduzierbarkeit und Zuverlässigkeit des Katapultiervorgangs erreicht wird.

Bei der vorliegenden Erfindung ist die Masse typischerweise auf einem Objektträgermittel angeordnet. Im Zusammenhang mit der automatischen Auswahl von Bereichen der Abbildung ist bei dem Separationsvorgang eine hohe Effektivität bei einem gleichzeitig geringen Aufwand für den Benutzer gewährleistet.

Es ist besonders vorteilhaft, wenn bei dem Erzeugen der Abbildung im Wesentlichen das gesamte Objektträgermittel abgebildet wird. Hierdurch können für das automatische Auswerten der Abbildung alle auf dem Objektträgermittel befindlichen Bereiche der Masse einbezogen werden. Bei dem Objektträgermittel kann es sich beispielsweise um einen Glasobjektträger handeln, auf welchem ein histologischer Gewebeschnitt angeordnet ist.

Die Abbildungsmittel sind vorzugsweise durch ein Mikroskop gebildet, welches ein über oder unter dem Objektträgermittel angeordnetes Objektiv umfasst. Aufgrund der für Glasobjektträger üblichen länglichen rechteckigen Gestalt und den typischen Vergrößerungsbereichen von Mikroskopobjektiven ist es dabei in der Regel nicht möglich, den gesamten Glasobjektträger durch das Mikroskopobjektiv abzubilden. Aus diesem Grund kann gemäß der vorliegenden Erfindung die Abbildung erzeugt werden, indem mehrere Unterabbildungen zusammengesetzt werden, welche jeweils durch relatives Bewegen des Trägers mit dem darauf befindlichen Objektträgermittel bezüglich eines Aufnahmemittels oder Objektivs der Abbildungsmittel, d.h. des Mikroskops, gewonnen werden. Auf diese Weise ist es möglich, einen großen Bereich des Objektträgermittels abzubilden, und gleichzeitig eine hohe Auflösung der Abbildung zu erreichen.

Die Abbildung bzw. die Unterabbildungen werden dabei vorzugsweise gewonnen, indem eine geeignete Kamera, z.B. eine CCD-Kamera, mit einer Optik des Aufnahmemittels gekoppelt ist und das von der Kamera aufgenommene Bild in ein zur automatischen Auswertung geeignetes Format konvertiert wird. Bei diesem Format kann es sich insbesondere um ein für digitale Bild- und Datenverarbeitungsmittel geeignetes digitales Bildformat handeln.

Es ist besonders vorteilhaft, wenn die Unterabbildungen derart erzeugt werden, dass sich beim Zusammensetzen der Unterabbildungen zu der Abbildung mindestens ein Überlappbereich zwischen den Unterabbildungen bildet. Dies bedeutet, dass ein bestimmter Bereich der Masse oder des Objektträgermittels auf jeder von zwei benachbarten Unterabbildungen enthalten ist. Hierdurch wird zunächst gewährleistet, dass an den Schnittstellen zwischen den Unterabbildungen keine Bildinformation verloren geht. Im Zusammenhang mit dem erfindungsgemäßen Verfahren ist es jedoch besonders vorteilhaft, wenn dieser Überlappbereich zwischen den benachbarten Abbildungen ebenfalls automatisch ausgewertet wird, um darin einander entsprechende Strukturen zu identifizieren, so dass beim anschließenden Zusammensetzen der Unterabbildungen zu der Abbildung die Unterabbildungen anhand dieser identifizierten Strukturen ausgerichtet werden können. Auf diese Weise kann die Abbildung aus den Unterabbildungen zusammengesetzt werden, ohne dass in der Abbildung Fehler auftreten, welche beispielsweise durch eine ungenügende Präzision beim relativen Bewegen des Trägers bezüglich des Aufnahmemittels der Abbildungsmittel entstehen können.

Das Verfahren ist vorzugsweise derart ausgestaltet, dass bei dem automatischen Auswerten der Abbildung mehrere Bereiche automatisch ausgewählt werden und die geometrischen Kenngrößen jedes ausgewählten Bereichs abgespeichert werden. Die Steuersignale zum automatischen Schneiden der Masse und/oder Katapultieren des Objekts werden dann jeweils basierend auf den gespeicherten geometrischen Kenngrößen der ausgewählten Bereiche erzeugt.

Auf diese Weise kann der gesamte Separationsvorgang derart gestaltet werden, dass zunächst ein Auswerten der Abbildung erfolgt und dann die gespeicherten geometrischen Kenngrößen der ausgewählten Bereiche vorzugsweise nacheinander in Form einer Liste abgearbeitet werden. Hierdurch kann speziell die Abfolge der Schneide- und Katapultiervorgänge deutlich effektiver gestaltet werden. Insgesamt kann somit eine deutlich höhere Geschwindigkeit für den Gesamtablauf erreicht werden.

Es ist in diesem Zusammenhang besonders vorteilhaft, wenn zusätzlich auch ein manuelles Auswählen von Bereichen möglich ist und die geometrischen Kenngrößen der automatisch ausgewählten Bereiche in einem gleichen Format abgespeichert werden wie diejenigen der manuell ausgewählten Bereiche. Hierdurch werden zunächst die für ein entsprechendes Steuersystem erforderlichen Komponenten vereinfacht bzw. deren Anzahl reduziert. Weiterhin ist es möglich, ein solches Steuersystem modular auszugestalten, wobei die Funktionen zum automatischen Auswählen von Bereichen und Berechnen von geometrischen Kenngrößen als Erweiterung für ein halbautomatisches System, bei welchem der Schneideund/oder Katapultiervorgang automatisch abläuft, d.h. rechnergesteuert ist, das Auswählen von Bereichen bzw. Bestimmen von Schnittkurven oder Zielpunkten jedoch manuell erfolgt, vorgesehen sein können.

Weiterhin kann nach dem Schneidevorgang eine weitere Abbildung erzeugt werden, welche wiederum automatisch ausgewertet wird, um darin eine vorgegebene Struktur in Form einer unvollständigen Schnittlinie um den ausgewählten Bereich herum zu identifizieren. Falls dem so ist, wird eine Schnittkurve ermittelt, basierend auf welcher Steuersignale zum erneuten automatischen Schneiden der Masse erzeugt werden, so dass der unvollständige Schnitt vervollständigt wird. Hierdurch wird eine erhöhte Zuverlässigkeit des Schneidevorgangs gewährleistet.

Die vorliegende Erfindung betrifft weiterhin ein Verfahren, welches sich auf einen Fall bezieht, in dem die Masse sich auf einem Träger befindet und in mehrere Teile aufgeteilt ist. Bei diesen Teilen der Masse kann es sich speziell um im Wesentlichen parallele Schnitte durch die Masse handeln, welche beispielsweise jeweils auf einem Objektträgermittel angeordnet sind, z.B. so genannte Folgeschnitte. Die Schnitte weisen typischerweise eine Stärke von wenigen Mikrometern auf.

Bei diesen Verfahren wird für jeden der Teile der Masse durch Abbildungsmittel eine Abbildung erzeugt. Die Abbildungen werden automatisch ausgewertet, um darin wiederkehrende Strukturen zu identifizieren. Bei diesen wiederkehrenden Strukturen kann es sich um Strukturen der Masse handeln oder um eine künstlich herbeigeführte Markierung, welche in jedem Teil der Masse eine wiederkehrende Struktur hervorruft. Es ist dabei möglich, dass eine bestimmte Form von wiederkehrender Struktur, z.B. durch die künstliche Markierung hervorgerufen, vorzugeben, oder ohne vorherige Festlegung auf eine bestimmte Struktur eine solche wiederkehrende Struktur durch das automatische Auswerten zu bestimmen. Erfindungsgemäß wird basierend auf den identifizierten Strukturen für mindestens einen Teil der Masse ein Bereich der Abbildung ausgewählt. Das Schneiden der Masse erfolgt dann in dem ausgewählten Bereich und/oder das Katapultieren des Objekts der Masse erfolgt aus dem ausgewählten Bereich.

In diesem Fall dient das automatische Auswählen des Bereichs zunächst nicht dazu, darauf basierend geometrische Kenngrößen des Bereichs zu ermitteln, welche dann verwendet werden, um Steuersignale zum Schneiden der Masse und/oder Katapultieren des Objekts zu erzeugen. Vielmehr wird in diesem Fall ein Bereich ausgewählt, welcher einem Bereich in einem anderen Teil der Masse oder mehreren Bereichen in jeweils anderen Teilen der Masse entspricht. Auf diese Weise kann in einem Teil der Masse, manuell oder automatisch, ein Bereich ausgewählt werden und ein entsprechender Bereich in mindestens einem anderen Teil der Masse automatisch ausgewählt werden.

Solche einander entsprechende Bereiche entstehen beispielsweise bei mehreren parallel zueinander durchgeführten histologischen Schnitten, wenn sich eine Struktur der Masse in einer Richtung senkrecht zu der Ebene der Schnitte über mehrere Schnittebenen erstreckt. Es ist häufig wünschenswert, für Untersuchungen Objekte aus einem Schnitt und aus einem entsprechenden Bereich eines weiteren Schnitts herauszupräparieren. Dies ist bei einem herkömmlichen Verfahren jedoch mit einem erheblichen Aufwand verbunden, oder sogar vollständig unmöglich. Dies ist unter anderem darauf zurückzuführen, dass Strukturen, welche sich über mehrere Schnitte hinweg erstrecken, sich üblicherweise von Schnitt zu Schnitt verändern bzw. vollständig verschwinden können. Weiterhin ist es möglich, dass bei der Präparation die Schnitte relativ zueinander verschoben, gedreht oder verzerrt werden.

Weiterhin werden zum Teil Färbungen an den Schnitten vorgenommen, um darin bestimmte Strukturen hervorzuheben. Dies ermöglicht es in einem solchen Schnitt einen interessanten Bereich auszuwählen. Aufgrund der Färbung ist eine Entnahme von Objekten aus diesem Schnitt jedoch unter Umständen nicht zweckmäßig.

Mit dem erfindungsgemäßen Verfahren ist es möglich, einen entsprechenden Bereich in einem anderen Schnitt, welcher z.B. nicht gefärbt ist, ausfindig zu machen. Dieser Bereich steht dann als Arbeitsbereich zum Schneiden der Masse und/oder Katapultieren eines Objekts der Masse zur Verfügung.

Vorzugsweise werden in diesem Arbeitsbereich wie oben beschrieben wiederum automatisch Bereiche ausgewählt, geometrische Kenngrößen berechnet und Steuersignale zum automatischen Schneiden der Masse und/oder Katapultieren des Objekts basierend auf den geometrischen Kenngrößen erzeugt. Hierbei kann auch der gesamte Arbeitsbereich automatisch ausgewählt werden und anschließend ein entsprechender Schneide- und Katapultiervorgang erfolgen. Es ist jedoch auch möglich, innerhalb des Arbeitsbereichs Bereiche manuell auszuwählen bzw. Schnittkurven und/oder Zielpositionen manuell vorzugeben.

Für das Identifizieren der wiederkehrenden Strukturen der Teile der Masse, welches bevorzugt in der zuvor beschriebenen objektorientierten Weise erfolgt, wird vorzugsweise entsprechend der Art der wiederkehrenden Strukturen ein Regelsatz vorgegeben. Im Allgemeinen unterscheiden sich die Regelsätze abhängig davon, ob beispielsweise bestimmte vorgegebene Strukturen identifiziert werden sollen oder ob in verschiedenen Abbildungen wiederkehrende Strukturen identifiziert werden sollen. Es ist daher vorteilhaft, für verschiedene Zwecke jeweils Regelsätze vorzugeben und für den jeweiligen Identifizierungsvorgang einen entsprechenden Regelsatz auszuwählen.

Das oben erwähnte künstliche Erzeugen von wiederkehrenden Strukturen in parallelen Schnitten kann erfindungsgemäß dadurch erfolgen, indem die Masse vor Erzeugen der parallelen Schnitte mit einer Markierung versehen wird, welche in jedem der Schnitte eine wiederkehrende Struktur hervorruft. Diese kann anschließend identifiziert werden und zur Definition des Arbeitsbereichs verwendet werden. Eine derartige Markierung wird bevorzugt durch drei Löcherbereiche, welche in einer sich im Wesentlichen senkrecht zu der Ebene der parallelen Schnitte erstreckenden Richtung in der Masse herbeigeführt werden, vorgenommen. Das Identifizieren der drei Löcherbereiche ist auf zuverlässige Weise mit der erfindungsgemäßen automatischen Auswertung möglich. Darüber hinaus können derartige Löcherbereiche auch mit einem vertretbaren Aufwand manuell durch den Benutzer erkannt und markiert werden.

Es ist besonders vorteilhaft, wenn die wiederkehrenden Strukturen mindestens drei Positionen in dem jeweiligen Schnitt definieren. Anhand dieser Positionen können dann bezüglich des Trägers definierte Referenzpunkte ermittelt werden. Wenn somit für zwei der Schnitte diese Referenzpunkte ermittelt sind, kann aus diesen Positionen eine Transformationsmatrix bestimmt werden, welche es ermöglicht, Positionsangaben des einen Schnitts und des anderen Schnitts ineinander umzusetzen. Die Transformationsmatrix berücksichtigt dabei vorzugsweise Verschiebungen, Drehungen oder Verzerrungen der Schnitte relativ zueinander.

Durch die Transformationsmatrix können Positionsangaben verschiedener Schnitte bzw. von deren Abbildungen zuverlässig ineinander überführt werden, so dass ein entsprechender Bereich eines anderen Schnittes gezielt ausfindig gemacht werden kann.

Wenn die Referenzpunkte durch die Löcherbereiche definiert sind, können sie mit vertretbarem Aufwand auch manuell ausgewählt werden, so dass ein automatisches Auswerten der Abbildungen unter Umständen nicht erforderlich ist, um die Transformationsmatrix zu bestimmen.

Die Erfindung betrifft weiterhin ein Steuersystem für eine Vorrichtung zur Bearbeitung einer Masse durch Laserbestrahlung. Die Vorrichtung weist hierfür speziell einen Träger auf, auf welchem sich die Masse befindet. Die Vorrichtung weist weiterhin eine Laserlichtquelle zum Erzeugen eines Laserstrahls auf, um durch Bestrahlung mit dem Laserstrahl die Masse zu schneiden und/oder ein Objekt der Masse von dem Träger zu einer Auffangvorrichtung zu katapultieren. Außerdem umfasst die Vorrichtung Abbildungsmittel zum Erzeugen mindestens einer Abbildung zumindest eines Teils der Masse. Das erfindungsgemäße Steuersystem weist Steuermittel zur automatischen Ansteuerung der Laserlichtquelle und zur automatischen Ansteuerung von Verstellmitteln zur Herbeiführung einer Relativbewegung zwischen dem Laserstrahl und dem Träger auf. Das Steuersystem umfasst weiterhin Bildverarbeitungsmittel zum automatischen Auswerten der Abbildung oder mehrerer Abbildungen, um darin Strukturen zu identifizieren, und Datenverarbeitungsmittel, welche dazu ausgestaltet sind, basierend auf den identifizierten Strukturen automatisch einen Bereich der mindestens einen Abbildung auszuwählen.

Das erfindungsgemäße Steuersystem ist daher in der Lage, Abbildungen automatisch auszuwerten, um darin Strukturen zu identifizieren, und darauf basierend automatisch einen Bereich der Abbildung auszuwählen. Dieser Bereich kann zum einen als Arbeitsbereich verwendet werden, um darin weitere Strukturen auszuwählen, oder es können geometrische Kenngrößen des ausgewählten Bereichs bestimmt werden. Es ist dabei speziell vorteilhaft, wenn die Steuermittel zum Erzeugen von Steuersignalen zum automatischen Schneiden der Masse und/oder Katapultieren des Objekts basierend auf den geometrischen Kenngrößen des ausgewählten Bereichs der Abbildung ausgestaltet sind. Das erfindungsgemäße Steuersystem ist somit insbesondere dafür geeignet, mit einer Vorrichtung der oben beschriebenen Art eines der erfindungsgemäßen Verfahren durchzuführen.

Weiterhin betrifft die Erfindung eine Vorrichtung zum Bearbeiten einer Masse mit einem erfindungsgemäßen Steuersystem, welche insbesondere zum Durchführen eines der erfindungsgemäßen Verfahren ausgestaltet sein kann.

Die Vorteile der vorliegenden Erfindung liegen darin, dass sie ein erheblich schnelleres Auffinden von Objekten oder Bereichen der Masse ermöglicht. Weiterhin wird die Auswahl von Objekten oder Bereichen nach objektiven Kriterien, d.h. nach bestimmten Regeln, durchgeführt, wodurch subjektive Einflüsse aufgrund einer manuellen Auswahl durch den Benutzer vermieden werden und die Reproduzierbarkeit der Bearbeitung erhöht wird. Weiterhin ist es möglich, verschiedene Regelsätze zu definieren, welche dafür angepasst sind, bestimmte Strukturen ausfindig zu machen, wobei für eine bestimmte Problemstellung, beispielsweise das Separieren von Zellen eines bestimmten Gewebetyps, dann lediglich der entsprechende Regelsatz ausgewählt werden muss. Zudem wird im Falle von Folgeschnitten das Auffinden von einander entsprechenden Bereichen ermöglicht, woraus sich beispielsweise die Möglichkeit ergibt, in einem oder mehreren Schnitten Strukturen durch Färbung hervorzuheben, Objekte jedoch aus einem entsprechenden Bereich eines anderen Schnitts zu entnehmen, welcher nicht gefärbt und somit auch nicht chemisch verändert oder verunreinigt ist.

Die Erfindung wird nachfolgend unter Bezugnahme auf die beigefügten Zeichnungen anhand von bevorzugten Ausführungsbeispielen erläutert.
Fig. 1 zeigt einen prinzipiellen Aufbau einer Vorrichtung zur Realisierung der vorliegenden Erfindung.
Fig. 2 zeigt beispielhaft eine Abbildung einer biologischen Masse,
Fig. 3 zeigt ein Ablaufdiagramm für ein Verfahren gemäß einem Ausführungsbeispiel der Erfindung,
Fig. 4A und 4B zeigen die Abbildung von Fig. 2, wobei jeweils identifizierte Strukturen unterschiedlicher Hierarchieebenen dargestellt sind,
Fig. 4C und 4D zeigen jeweils die Abbildung von Fig. 2, wobei innerhalb der Abbildungen ein Bereich bzw. mehrere Bereiche ausgewählt und dafür ermittelte geometrische Kenngrößen dargestellt sind,
Fig. 5A und 5B zeigen jeweils eine vollständige Abbildung eines Objektträgers, wobei die Abbildung aus Unterabbildungen zusammengesetzt ist,
Fig. 6 zeigt parallele Schnitte durch eine Masse, welche jeweils auf einem Objektträgermittel angeordnet sind,
Fig. 7 zeigt ein Ablaufdiagramm für ein Verfahren gemäß einem weiteren Ausführungsbeispiel der Erfindung,
Fig. 8A und 8B zeigen eine Abbildung eines Schnitts durch eine Masse, wobei Strukturen durch eine jeweils unterschiedliche selektive Markierung hervorgehoben sind,
Fig. 8C und 8D zeigen jeweils einen weiteren Schnitt durch die Masse von Fig. 8A und 8B, wobei jeweils ein Bereich ausgewählt wurde, dessen ermittelte geometrische Kenngrößen dargestellt sind,
Fig. 9A und 9B veranschaulichen ein Verfahren zum künstlichen Hervorrufen einer wiederkehrenden Struktur in parallelen Schnitten durch eine Masse, und
Fig. 10 zeigt schematisch den Aufbau eines Steuersystems gemäß einem Ausführungsbeispiel der vorliegenden Erfindung.

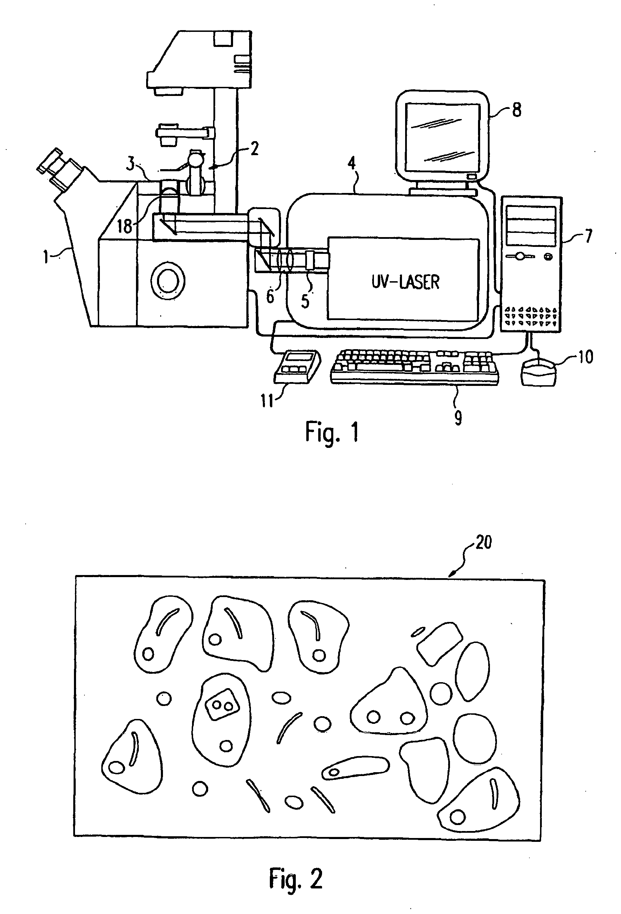

In Fig. 1 ist der Aufbau eines Laser-Mikroskop-Systems dargestellt, wie es zur Realisierung der vorliegenden Erfindung eingesetzt werden kann. Das System ist modular aufgebaut und kann somit an unterschiedliche experimentelle Anforderungen individuell angepasst werden. Bei dem dargestellten Laser-MikroskopSystem handelt es sich insbesondere um ein inverses Laser-Mikrodissektionssystem zum Separieren, d.h. Herauslösen, von biologischen Objekten, z.B. einzelnen Zellen oder Zellbestandteilen, aus einem biologischen Material bzw. Präparat, wobei die Erfindung jedoch selbstverständlich nicht auf diese bevorzugte Ausgestaltung beschränkt ist. Die Erfindung kann beispielsweise auch auf aufrechte Laser-Mikroskop-Systeme oder auf die Bearbeitung nichtbiologischer Materialien angewendet werden. Ebenso kann gegebenenfalls auf den Einsatz eine Mikroskops - abhängig von dem konkreten Anwendungsfall - verzichtet werden.

Wesentlicher Bestandteil des in Fig. 1 dargestellten Systems ist eine Laservorrichtung 4, in der eine Laserlichtquelle zur Erzeugung eines Laserstrahls untergebracht ist. Des Weiteren ist in der Laservorrichtung 4 eine Optik 5, 6 untergebracht, welche dazu dient, den Laserstrahl in ein Mikroskop 1 einzukoppeln und den Laserfokus in der Objektebene auf den optischen Fokus des Mikroskops 1 abzustimmen. Im vorliegenden Fall handelt es sich um einen gepulsten UV-Stickstofflaser, dessen Wellenlänge 300 nm und dessen Impulsenergie z.B. 270 Mikrojoule beträgt. Die Impulsdauer beträgt 3 ms, während die Impulsfrequenz zwischen 1-30 Impulse pro Sekunde einstellbar ist.

Der Stickstofflaser emittiert einen Laserstrahl mit einer festen Laserenergie. Für eine präzise Laser-Mikromanipulation und Laser-Mikrodissektion ist eine genaue Einstellbarkeit der Laserenergie erforderlich. Aus diesem Grund ist ein Quarzfilter 5 senkrecht zum Laserstrahlpfad angeordnet. Dieser Quarzfilter wird von einem Gleichstrommotor gedreht, welcher über einen Potentiometerknopf (nicht dargestellt) gesteuert werden kann, um somit die Laserenergie entsprechend einzustellen.

Neben der Einstellung der Laserenergie kann auch der Laserfokus unabhängig von dem Mikroskopfokus eingestellt werden, d.h. der Brennpunkt des Lasers kann in z-Richtung relativ zur Objektebene des Mikroskops 1 verschoben werden. Zu diesem Zweck ist ein Schrittmotor vorgesehen, der die in Fig. 1 gezeigten Linsen 6 bewegt. Die Fokussierung bzw. der Schrittmotor kann wiederum durch einen Potentiometerknopf gesteuert werden.

Der Laserstrahl wird über mehrere beschichtete Strahlteiler in das Mikroskop 1 eingekoppelt und zu einem Objektiv 18 hin abgelenkt. Der Durchmesser des auf der Objektebene auftretenden Laserstrahls ist maßgeblich von der numerischen Apertur des Objektivs 18 abhängig. Ein Objektiv mit einer relativ hohen numerischen Apertur ermöglicht Laserstrahldurchmesser von weniger als 1 µm. Zudem ist es wichtig, dass das jeweils verwendete Objektiv 18 eine hohe Durchlässigkeit für die Laserwellenlänge aufweist, um Energieverluste zu minimieren.

Der über das Objektiv 18 emittierte Laserstrahl trifft schließlich auf einen motorisierten und computergesteuerten Mikroskop- oder Trägertisch 3, auf dem ein Objektträgermittel mit einer zu bearbeitenden biologischen Masse angeordnet ist. Oberhalb des Trägertisches 3 befindet sich eine ebenfalls motorisierte und computergesteuerte Auffangvorrichtung 2. Der Mikroskoptisch 3 und die Auffangvorrichtung 2 ermöglichen eine exakte Positionierung mit einer Präzision im Nanometerbereich sowie die automatische Durchführung von Mikro-Manipulationsprozeduren.

Der motorisierte Mikroskoptisch 3 ist entlang zweier linearer Achsen (x- und y-Richtung) verfahrbar. Zu diesem Zweck sind zwei Hybrid-Schrittmotoren mit vier Schritten pro 360°-Umdrehung vorgesehen. Die minimale Schrittgröße beträgt 20 nm, so dass auf dem Mikroskoptisch 3 befindliche Objektträgermittel mit sehr hoher Genauigkeit positioniert werden können.

Die Auffangvorrichtung 2 dient dazu, von dem Mikroskoptisch 3 bzw. dem Objektträgermittel wegkatapultierte biologische Objekte aufzufangen. Die motorisierte Auffangvorrichtung 2 kann ebenfalls sowohl in x- als auch in y-Richtung verfahren werden. Zusätzlich ist auch eine Verfahrbarkeit in z-Richtung vorgesehen. Zu diesem Zweck sind drei Schrittmotoren vorgesehen, welche dieselbe Präzision wie die für den Mikroskoptisch 3 vorgesehenen Schrittmotoren aufweisen.

Bei dem Mikroskop 1 kann es sich um ein beliebig ausgestaltetes Mikroskop handeln. Insbesondere ist sowohl die Verwendung eines inversen als auch eines aufrechten Mikroskops oder eines Lasermikroskops denkbar. Das Mikroskop 1 ist mit einer Kamera, insbesondere einer CCD-Kamera ("Charge Coupled Device") ausgestattet, welche den Bereich des Mikroskoptisches, welcher zur Aufnahme des Objektträgermittels vorgesehen ist, aufnimmt. Die Kamera kann dabei das Bild über das Mikroskopobjektiv 18 aufnehmen oder aber mit einer eigenen Optik zur Abbildung von auf dem Mikroskoptisch 3 angeordneten Objektträgermitteln verfügen. Das Videosignal dieser Kamera wird einem Computersystem 7 zugeführt, wobei es sich beispielsweise um einen handelsüblichen Personal Computer handeln kann.

In dem Computersystem 7 wird das Videosignal beispielsweise mit einer Framegrabber-Karte verarbeitet und zu einer Abbildung in einem digitalen Format konvertiert, welches zur weiteren Verarbeitung in dem Computersystem 7 oder in einem weiteren, damit verbundenen Computersystem geeignet ist. Es ist möglich die von der Kamera aufgenommenen Bilder in Echtzeit auf einem Bildschirm 8 des Computersystems 7 darzustellen. Weiterhin ist es möglich, einzelne auf diese Weise aufgenommene Abbildungen in einem Speichermedium des Computersystems 7 abzuspeichern oder über ein Netzwerk an ein weiteres Computersystem zu übertragen.

Das Computersystem 7 hat weiterhin die Funktion eines Steuersystems für die Vorrichtung zur Bearbeitung der Masse. Hierfür verfügt das Computersystem 7 über eine entsprechende Schnittstellenkarte, welche Steuersignale erzeugt, über welche eine automatische Ansteuerung der Laservorrichtung 4, des Mikroskops 1, der Auffangvorrichtung 2 und des Mikroskoptisches 3 möglich ist. Zur Einstellung bzw. Auswahl dieser Funktionen sind für Computersysteme übliche Eingabemittel, wie beispielsweise eine Tastatur 9 oder eine Computermaus 10, vorgesehen. Des Weiteren ist der Laservorrichtung 4 ein Fußschalter 11 zugeordnet, durch dessen Betätigung der Laser manuell aktiviert werden kann.

Nachfolgend soll ein mit dem oben beschriebenen System durchzuführendes Verfahren zur Bearbeitung einer biologischen oder nichtbiologischen Masse näher erläutert werden. Im Allgemeinen handelt es sich bei diesen Verfahrensschritten um automatisch durchgeführte Vorgänge, welche durch das Computersystem 7 durchgeführt oder gesteuert werden. Gegebenenfalls werden jedoch auch Vorgänge manuell eingeleitet oder durchgeführt.

Zunächst wird mit der Kamera über das Objektiv 8 des Mikroskops 1 eine Abbildung der biologischen Masse auf dem Mikroskoptisch 3 erzeugt. Ein Beispiel für eine solche Abbildung ist in Fig. 2 dargestellt und mit dem Bezugszeichen 20 bezeichnet. Zum Erzeugen der Abbildung wird das Videosignal der Kamera in dem Computersystem 7 in ein pixelbasiertes digitales Abbildungsformat konvertiert.

Die in Fig. 2 beispielhaft dargestellte Abbildung 20 der Masse zeigt verschiedenartige Strukturen, welche sich in Kontrastunterschieden der Abbildung 20 manifestieren. Es ist dabei speziell erkennbar, dass die Strukturen unterschiedliche Formen und Größen aufweisen können. Weiterhin ist erkennbar, dass einige dieser Strukturen innerhalb von anderen Strukturen enthalten sind oder dass bestimmte Strukturen zueinander benachbart sind.

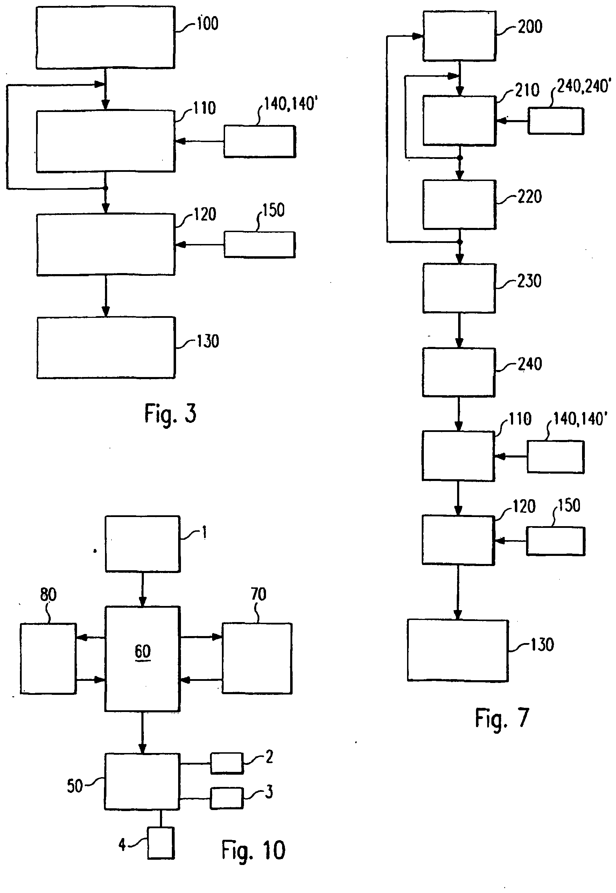

In Fig. 3 ist ein Ablaufdiagramm für das Verfahren dargestellt. In Abbildungsschritt 100 wird die Abbildung zumindest eines Teils der Masse auf dem Mikroskoptisch 3 mittels der Kamera über das Objektiv 18 des Mikroskops erzeugt. Die Abbildung wird in dem Computersystem 7 in ein zur weiteren Verarbeitung geeignetes Format konvertiert.

Zum automatischen Auswerten der Abbildung in Schritt 110 wird diese in dem dafür geeigneten Format an eine Bildverarbeitungseinheit übergeben. Die Bildverarbeitungseinheit ist dabei als Funktionsmodul innerhalb des Computersystems 7 durch eine entsprechende Software realisiert. Durch das Auswerten werden in der Abbildung vorgegebene Strukturen identifiziert. Dabei kann es sich um ähnliche Strukturen handeln, wie sie in Fig. 2 dargestellt sind. Hierfür wird der Bildverarbeitungseinheit ein entsprechender Regelsatz 140 zugeführt, der vorgegebene Merkmale beinhaltet, welche die zu identifizierenden Strukturen aufweisen. Diese Merkmale können speziell Farbkontraste oder Helligkeitskontraste oder aber auch Beziehungen der Strukturen untereinander beinhalten. Eine solche Regel kann somit vorsehen, dass in einer bestimmten Struktur eine weitere Struktur enthalten ist, um diese Struktur zu identifizieren. Weiterhin kann eine Regel vorsehen, dass bestimmte Strukturen zueinander benachbart sind.

Auf Basis der identifizierten Strukturen wird ein Bereich der Abbildung 20 ausgewählt, woraufhin der Auswerteschritt wiederholt werden kann, um weitere Bereiche auszuwählen. Dies kann auf Basis desselben Regelsatzes 140 erfolgen, es kann jedoch auch ein anderer Regelsatz 140' verwendet werden. Die Regelsätze 140, 140' können dabei durch den Benutzer aus einer Gruppe von vorgegebenen Regelsätzen ausgewählt werden oder durch den Benutzer direkt definiert werden.

Nach Auswahl mindestens eines Bereichs der Abbildung werden in einem Berechnungsschritt 120 geometrische Kenngrößen des ausgewählten Bereichs bestimmt. Diese geometrischen Kenngrößen umfassen zunächst eine Position des ausgewählten Bereichs auf dem Mikroskoptisch 3 sowie eine bezüglich des Mikroskoptisches 3 definierte Umfangslinie des ausgewählten Bereichs. Die Umfangslinie kann dabei als Polygonzug oder als Linienzug ohne scharfe Ecken, beispielsweise als Spline definiert sein. Auf diese Weise kann mit einer geringen Anzahl von Punkten eine Umfangslinie des ausgewählten Bereichs definiert werden, welche eng an den darin befindlichen Strukturen ausgerichtet ist. Zusätzlich kann auch beispielsweise ein Flächeninhalt oder eine durchschnittliche Helligkeit des ausgewählten Bereichs bestimmt werden. Diese Größen können beispielsweise, falls eine Vielzahl von Bereichen automatisch ausgewählt wird, für statische Zwecke verwendet werden.

Als weitere geometrische Kenngrößen des ausgewählten Bereichs werden zur weiteren Verwendung bei einem automatischen Schneide- oder Katapultiervorgang eine Schnittkurve und ein Zielpunkt bestimmt. Die Schnittkurve wird dabei derart festgelegt, dass die Umfangslinie des ausgewählten Bereichs darin enthalten ist, wobei die Schnittkurve mindestens einen vorbestimmten Abstand von der Umfangslinie des ausgewählten Bereichs aufweist. Dieser vorbestimmte Abstand gewährleistet, dass beim Schneiden entlang der Schnittkurve in dem ausgewählten Bereich befindliche Strukturen nicht beschädigt werden. Dieser vorbestimmte Abstand kann vom Benutzer fest vorgegeben werden oder aber dynamisch basierend auf den identifizierten Strukturen, z.B. auf der ermittelten Helligkeit des ausgewählten Bereichs, angepasst werden. Es kann dabei für als besonders empfindlich eingestufte Strukturen ein erhöhter Abstand ausgewählt werden. Gleiches ist sinnvoll für Strukturen, welche einen nur ungenau definierten Randbereich aufweisen.

Weiterhin wird eine Zielposition bestimmt, auf welche der Laserstrahl zum Katapultieren des Objekts gerichtet wird. Diese Zielposition kann durch den geometrischen Mittelpunkt des ausgewählten Bereichs, d.h. einen zweidimensionalen Schwerpunkt, definiert sein. Dieses gewährleistet eine präzise Ausrichtung des Katapultiervorgangs. Alternativ kann, wenn es vorgesehen ist, nicht vollständig um den ausgewählten Bereich herumzuschneiden, dieser Zielpunkt in den Bereich zwischen den Endpunkten der nicht vollständigen Schnittlinie gelegt werden. In diesem Fall wird gewährleistet, dass das zu katapultierende Objekt bis zum Katapultiervorgang bezüglich der biologischen Masse fixiert ist.

Die geometrischen Kenngrößen, welche im Berechnungsschritt 120 automatisch bestimmt wurden, werden zum Erzeugen von Steuersignalen zum automatischen Schneiden der biologischen Masse und/oder Katapultieren des Objekts an Steuermittel in Form einer Steuereinheit übergeben. Im nachfolgenden Steuersignalerzeugungsschritt 130 werden auf Basis der geometrischen Kenngrößen, speziell auf Basis der Schnittkurve und/oder des Zielpunktes, Steuersignale zum automatischen Schneiden der biologischen Masse und/oder Katapultieren des Objekts erzeugt. Diese beinhalten Steuersignale und Steuerparameter für die Laservorrichtung 4 und für den verstellbaren Mikroskoptisch 3. Weiterhin werden Steuersignale für die Auffangvorrichtung 2 erzeugt, um das katapultierte Objekt an einer bestimmten Position der Auffangvorrichtung 2 aufzufangen. Für den Schneidevorgang werden Steuersignale für den Mikroskoptisch 3 erzeugt, welche eine Relativbewegung des auf dem Mikroskoptisch 3 angeordneten Objektträgermittels mit der biologischen Masse bezüglich des Laserstrahls hervorrufen. Die Relativbewegung zwischen der biologischen Masse und dem Laserstrahl wird dabei derart gesteuert, dass sich der Laserstrahl entlang der zuvor bestimmten Schnittkurve bewegt. Gleichzeitig wird der Laserstrahl aktiviert, so dass das gewünschte Schneiden der Masse um den ausgewählten Bereich herum bewirkt wird. Für das Aktivieren und Einstellen der Laservorrichtung 4 werden ebenfalls entsprechende Steuersignale erzeugt. Für das Katapultieren des Objekts wird ein Verstellsignal für den Mikroskoptisch 3 erzeugt, welches bewirkt, dass der Laserstrahl auf den zuvor ermittelten Zielpunkt gerichtet ist. Ein entsprechen des Steuersignal für die Laservorrichtung 4 bewirkt daraufhin einen Laserimpuls oder Laserschuss, welcher das Objekt bzw. den ausgewählten Bereich in die Auffangvorrichtung 2 katapultiert.

Das Verfahren sieht vor, dass mehrere Bereiche ausgewählt werden können, für welche jeweils die geometrischen Kenngrößen bestimmt werden. Die geometrischen Kenngrößen werden für die verschiedenen Bereiche abgespeichert und dann zur Erzeugung der Steuersignale für den Mikroskoptisch 3 und die Laservorrichtung 4 in Form einer Liste abgearbeitet.

Es ist weiterhin vorgesehen, dass Objekte anhand der Eingabemittel 9, 10 des Computersystems 7 auch manuell ausgewählt werden können, wobei entsprechende Kenngrößen 150 der Liste hinzugefügt werden und anschließend im Steuersignalerzeugungsschritt 130 gemeinsam mit den geometrischen Kenngrößen der automatisch ausgewählten Bereiche abgearbeitet werden. Das manuelle Auswählen von Bereichen erfolgt vorzugsweise, indem der Benutzer auf dem Bildschirm 8, auf welchem die Abbildung 20 oder ein Teil der Abbildung 20 dargestellt ist, die gewünschte Schnittkurve um den Bereich legt bzw. den gewünschten Zielpunkt markiert. Die berechneten Schnittkurven und die auf diese Weise manuell erzeugten Schnittkurven sowie die dazu gehörigen Zielpunkte werden zusammen mit weiteren Parametern, wie z.B. Steuerparametem der Laservorrichtung 4, in einem gemeinsamen Format abgespeichert. Im Steuersignalerzeugungsschritt 130 ergibt sich somit kein Unterschied zwischen den automatisch ausgewählten und manuell ausgewählten Bereichen.

Es ist optional möglich, dass nach dem Schneidevorgang eine weitere Abbildung erzeugt wird, welche dann ausgewertet wird, um eine unter Umständen unvollständige Schnittlinie zu identifizieren.

Für den Fall einer unvollständigen Schnittlinie wird der entsprechende Bereich ausgewählt und eine Schnittkurve berechnet. Basierend auf der Schnittkurve werden dann Steuersignale für einen erneuten Schneidevorgang erzeugt.

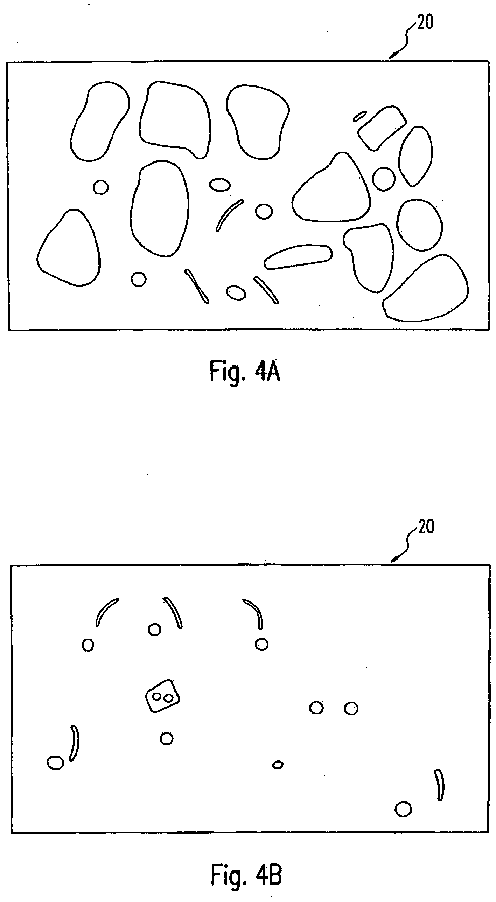

Im Folgenden soll anhand eines Beispiels das automatische Auswerten zur Identifizierung vorgegebener Strukturen erläutert werden. Hierfür sind in Fig. 4A und 4B Strukturen der Abbildung 20 von Fig. 2 dargestellt, welche zu unterschiedlichen Hierarchieebenen gehören. In Fig. 4A sind Strukturen einer übergeordneten Hierarchieebene dargestellt. Fig. 4B stellt Strukturen dar, welche zu einer untergeordneten Hierarchieebene gehören, d.h. in den Strukturen der Fig. 4A enthalten sind.

Der verwendete Regelsatz sieht zunächst vor, die gezeigten Strukturen anhand von Kontrastinformationen der Abbildung zu identifizieren, d.h. bestimmten Klassen zuzuordnen. Die auf diese Art und Weise identifizierten Strukturen alleine genügen jedoch bei diesem Beispiel noch nicht, um darauf basierend mit der gewünschten Genauigkeit einen oder mehrere Bereiche der Abbildung 20 auszuwählen. Hierfür werden gemäß diesem Regelsatz die Beziehungen der Strukturen unterschiedlicher Hierarchieebenen herangezogen. Als zusätzliches Kriterium wird in diesem Fall auch herangezogen, ob eine Struktur "länglich" oder "rund" ist.

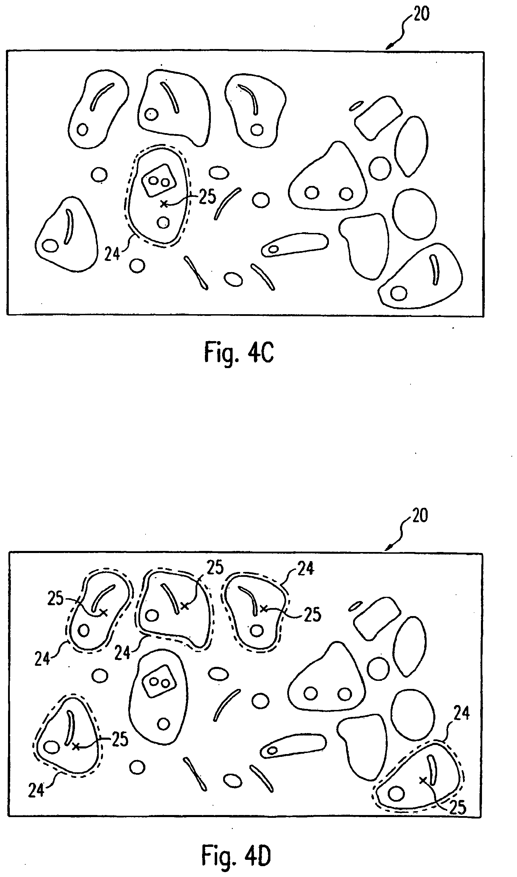

Fig. 4C zeigt ein Beispiel der Abbildung 20, bei welchem in dem Regelsatz definiert ist, einen Bereich auszuwählen, welcher eine Struktur enthält, wobei diese Struktur wiederum in einer untergeordneten Hierarchieebene zwei weitere Strukturen enthält, von denen eine "rund" ist und die andere in einer weiteren darunter liegenden Hierarchieebene wiederum zwei Strukturen enthält. Für den auf Basis dieses Regelsatzes ausgewählten Bereich ist die im Berechnungsschritt 120 bestimmte Schnittkurve 24 und der Zielpunkt 25 dargestellt.

Fig. 4D zeigt ein weiteres Beispiel für das automatische Auswählen von Bereichen, wobei ein anderer Regelsatz verwendet wurde, welcher vorsieht, dass der auszuwählende Bereich eine Struktur enthält, welche in einer untergeordneten Hierarchieebene zwei Strukturen enthält, von denen eine als "rund" und die andere als "länglich" klassifiziert ist. In diesem Fall wurden mehrere Bereiche automatisch ausgewählt.

Das vorangegangene Beispiel soll lediglich die Grundprinzipien der bevorzugten Auswertung verdeutlichen, welche Informationen aus verschiedenen Hierarchieebenen heranzieht. Gegebenenfalls können jedoch auch Strukturen einer einzigen Hierarchieebene genügen, um einen Bereich auszuwählen. Dies könnte beispielsweise gelten, wenn der auszuwählende Bereich einen besonders hohen Helligkeitskontrast oder Farbkontrast bezüglich seiner Umgebung aufweist. Weiterhin kann bei besonders markanten Formen eine herkömmliche Mustererkennung zum Einsatz kommen.

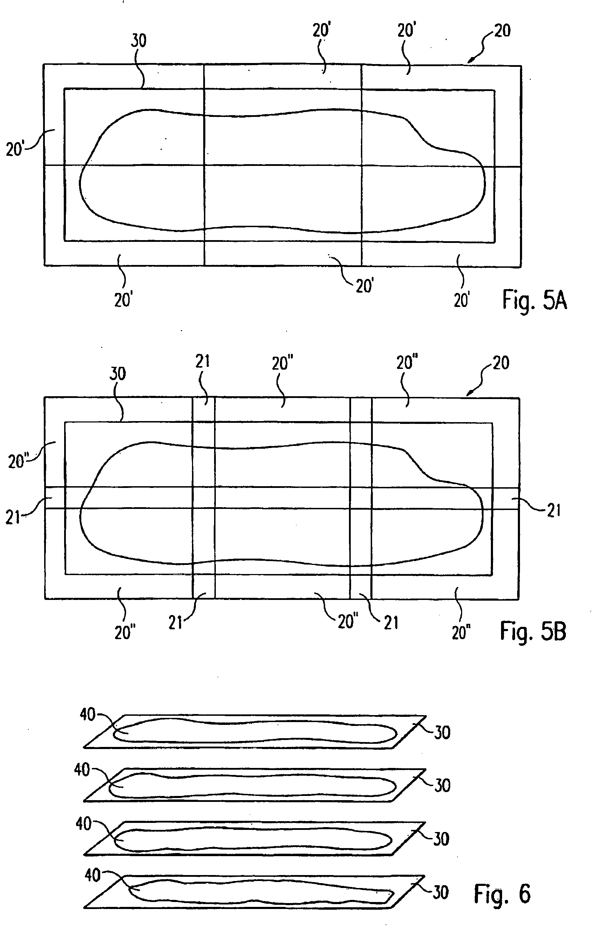

Fig. 5A und 5B zeigen jeweils eine Abbildung 20, wobei erkennbar ist, dass die Abbildung 20 ein Objektträgermittel 30 mit einer darauf befindlichen biologischen Masse vollständig darstellt. Hierfür ist die Abbildung 20 aus mehreren Unterabbildungen 20' bzw. 20" zusammengesetzt. In Fig. 5A sind die Unterabbildungen 20' bündig aneinander gefügt. Jede der Unterabbildungen 20' wurde erzeugt, indem mittels der Kamera des Mikroskops 1 über das Objektiv des Mikroskops 1 ein Videosignal erzeugt wurde. Jeder der Unterabbildungen ist dabei eine spezielle Position des Mikroskoptisches 3 mit dem darauf befindlichen Objektträger 30 bezüglich des Objektivs 18 zugeordnet, so dass sich bei der gewählten Vergrößerung der Optik der dargestellte Abbildungsbereich für die Unterabbildungen 20' ergibt. Die unterschiedlichen Positionen des Objektträgers 30 bezüglich des Objektivs 18 werden durch Verfahren des Mikroskoptisches 30 bezüglich des Objektivs 18 herbeigeführt. Aufgrund der hohen Präzision des Mikroskoptisches 3 kann die Position des Objektträgermittels 30 bezüglich des Objektivs 18 genau eingestellt werden, wodurch es möglich ist, die Unterabbildungen 20' direkt aneinander zu fügen. Diese erfolgt wiederum durch die Bildverarbeitungsmittel des Computersystems 7.

Fig. 5B zeigt eine alternative Möglichkeit zum Zusammensetzen der Unterabbildungen 20". In diesem Fall sind die Abbildungsbereiche der Unterabbildungen 20" derart ausgewählt, dass sich zwischen benachbarten Unterabbildungen 20" Überlappungsbereiche 21 bilden. Diese Überlappungsbereiche 21 gewährleisten zunächst, dass an den Schnittstellen zwischen den Unterabbildungen 20" keine Bildinformation verloren geht. Zudem kann in diesen Bereichen für jede der Unterabbildungen 20" ein Auswerten der Unterabbildung erfolgen, um in benachbarten Unterabbildungen 20" einander entsprechende Strukturen zu identifizieren. Dies erfolgt in der zuvor beschriebenen Weise, jedoch anhand eines speziell dafür angepassten Regelsatzes. Bei dem gezeigten Beispiel könnte hierfür z.B. der Randbereich des Objektträgers 30 identifiziert werden. Beim Zusammensetzen der Unterabbildungen 20" werden diese nun durch die Bildverarbeitungsmittel derart ausgerichtet, dass die einander entsprechenden Strukturen, welche zuvor identifiziert wurden, in Deckung gebracht werden. Auf diese Weise kann eine hohe Präzision beim Zusammensetzen der Abbildungen erreicht werden, ohne dass hierfür zusätzliche Komponenten oder Funktionen vorgesehen werden müssen.

Nachfolgend wird ein Beispiel für ein Verfahren zur Bearbeitung einer biologischen Masse erläutert, welchem eine Serie von Schnitten durch die biologische Masse zugrunde liegt. Es handelt sich dabei um so genannte histologische Folgeschnitte von wenigen Mikrometer Stärke, welche parallel zueinander durchgeführt wurden. Ein Beispiel von solchen Schnitten 40 ist in Fig. 6 dargestellt, wobei die Schnitte 40 jeweils auf einem Objektträgermittel 30 angeordnet sind. Es handelt sich dabei speziell um Folgeschnitte, welche in einem kurzen Abstand voneinander angefertigt wurden. Aufgrund von dreidimensionalen Strukturen, welche sich in der Masse senkrecht zu den Schnittebenen erstrecken, wird typischerweise eine in jedem der Schnitte wiederkehrende Struktur hervorrufen. Eine solche wiederkehrende Struktur kann jedoch auch künstlich durch entsprechende Maßnahmen herbeigeführt werden.

Um Objekte oder Material aus solchen Folgeschnitten herauszupräparieren und daran weitere Untersuchungen vornehmen zu können, kann es insbesondere erforderlich sein, in den einzelnen Schnitten 40 einander zugeordnete oder entsprechende Bereiche aufzufinden. Solche einander entsprechende Bereiche stammen dabei typischerweise aus einer dreidimensionalen Struktur der Masse, welche sich über mehrere der Schnitte 40 erstreckt und welcher somit in jedem der Schnitte 40 ein entsprechender Bereich zugeordnet werden kann. Das Identifizieren solcher einander entsprechender Bereiche ist jedoch manuell nur mit hohem Aufwand möglich oder zum Teil sogar vollständig unmöglich. Ferner kann ein Problem dahingehend bestehen, dass sich bei einem Aufbringen der Schnitte auf die Objektträgermittel 30 Verschiebungen, Drehungen oder Verzerrungen der Schnitte 40 ergeben.

Das Verfahren sieht daher vor, wiederkehrende Strukturen in den Teilen der biologischen Masse, d.h. in den einzelnen Schnitten 40, durch automatisches Auswerten von Abbildungen zu identifizieren. Hierfür wird zunächst in Abbildungsschritt 200 für jeden der Schnitte 40 bzw. jeden der Objektträger 30 eine Abbildung 20 erzeugt. Dies erfolgt, wie zuvor beschrieben, mit Hilfe der Kamera und des Computersystems 7, wobei es wiederum bevorzugt ist, Unterabbildungen zusammenzusetzen, um die Objektträger 30 jeweils vollständig abzubilden.

Der Mikroskoptisch 3 ist zur Aufnahme mehrerer Objektträgermittel ausgestaltet, so dass die Objektträgermittel 30 nebeneinander auf dem Mikroskoptisch 3 angeordnet werden können und in den Abbildungsbereich verfahren werden können. Der Mikroskoptisch 3 weist weiterhin Mittel auf, um die Objektträger 30 bezüglich des Mikroskoptisches 3 und damit auch zueinander auszurichten und sie auf dem Mikroskoptisch 3 zu halten.

Die erzeugten Abbildungen 20 werden von den Bildverarbeitungsmitteln in dem Auswerteschritt 210 anhand eines vorgegebenen Regelsatzes 240, 240' ausgewertet, um in den Abbildungen wiederkehrende Strukturen zu identifizieren. Dabei ist es möglich, dass der Regelsatz 240, 240' derart gestaltet ist, dass eine vorgegebene Struktur als die wiederkehrende Struktur identifiziert wird. Als zusätzliche Bedingung ist in diesem Fall erforderlich, dass die Struktur in mindestens zwei, vorzugsweise jedoch allen Abbildungen 20 identifiziert werden kann. Ferner muss gewährleistet sein, dass die wiederkehrenden Strukturen verschiedener Abbildungen 20 einander eindeutig zuzuordnen sind. Es eignen sich somit insbesondere Strukturen, welche in jeder der Abbildungen 20 höchstens einmal auftreten. Dieses Erfordernis kann mit steigendem Komplexitätsgrad der Strukturen jedoch in der Regel immer erfüllt werden. Auf Basis der identifizierten wiederkehrenden Strukturen wird für die Abbildungen jeweils ein Bereich ausgewählt, wobei die ausgewählten Bereiche der unterschiedlichen Abbildungen 20, wie zuvor beschrieben, einander zugeordnet sind. Bei dem Verfahren ist es auch möglich, für eine Abbildung mehrere Bereiche auszuwählen.

Im Berechnungsschritt 220 werden für die ausgewählten Bereiche wiederum geometrische Kenngrößen ermittelt. Diese Kenngrößen beinhalten speziell die Position dieser Bereiche bezüglich des Mikroskoptisches 3. Durch die somit definierten Bereiche und ermittelten geometrischen Kenngrößen ist daher für die nachfolgenden Bearbeitungsschritte ein Arbeitsbereich definiert.

Ferner ist es möglich, falls durch die wiederkehrenden Strukturen in den einzelnen Schnitten 40 mindestens drei Positionen definiert sind, anhand dieser Positionen eine Transformationsmatrix zu berechnen, welche zumindest eine Verschiebung oder Drehung, vorzugsweise jedoch auch eine Verzerrung der Schnitte 40, welche auf dem Mikroskoptisch auf Objektträgermitteln 30 nebeneinander angeordnet sind, berücksichtigt. Die Transformationsmatrix ermöglicht es dabei, Positionsangaben für einen der Schnitte 40 in Positionsangaben eines anderen Schnitts 40 umzusetzen. Die Transformationsmatrix ist dabei jeweils zwischen zwei der Schnitte 40 definiert. Im vorliegenden Fall wird daher für jedes Paar von Schnitten die Transformationsmatrix bestimmt oder die Transformationsmatrix jeweils bezüglich eines als Referenzschnitt dienenden Schnitts ermittelt.

Im Bildkorrekturschritt 240 erfolgt eine Bildkorrektur der Abbildungen 20 auf Basis der Transformationsmatrix. Dies erfolgt, indem auf jede Abbildung 20, außer einer Referenzabbildung, die bezüglich dieser Referenzabbildung bestimmte Transformationsmatrix angewendet wird.

Die nachfolgenden Schritte 110, 120 und 130 entsprechen dem zuvor anhand von Fig. 3 beschriebenen Verfahren, wobei der Abbildungsschritt jedoch entfällt und im Auswerteschritt 110 die im Korrekturschritt 240 korrigierten Abbildungen 20 ausgewertet werden. Es ist wiederum möglich, anhand der vorgegebenen oder entsprechend definierter Regelsätze 140, 140' automatisch Bereiche zum Schneiden und/oder Katapultieren auszuwählen, oder anhand einer über die Eingabemittel 9, 10 des Computersystems in die Abbildung gezeichneten Schnittkurve 24 und/oder Zielpunktes 25 Objekte oder Bereiche manuell zum Schneiden und/oder Katapultieren auszuwählen.

Die auf diese Weise gewonnenen geometrischen Kenngrößen werden dann wiederum von den Steuermitteln im Steuersignalerzeugungsschritt 130 in Form einer Liste abgearbeitet.

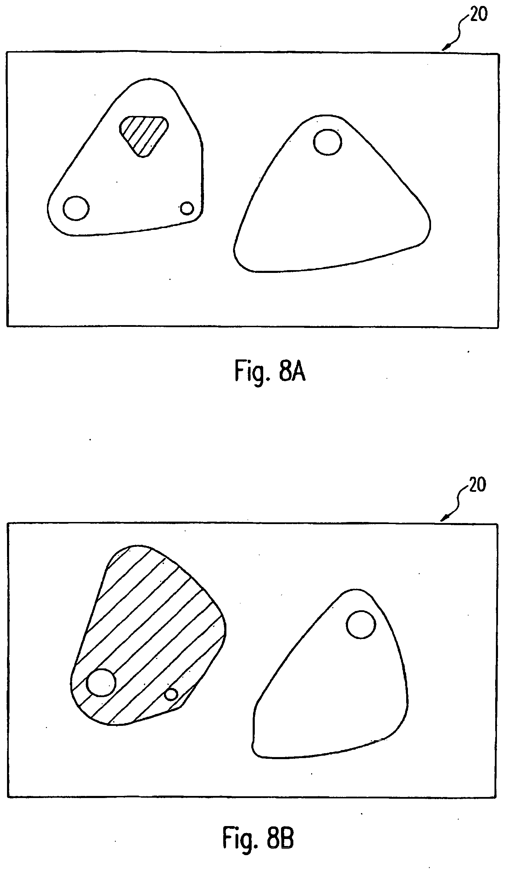

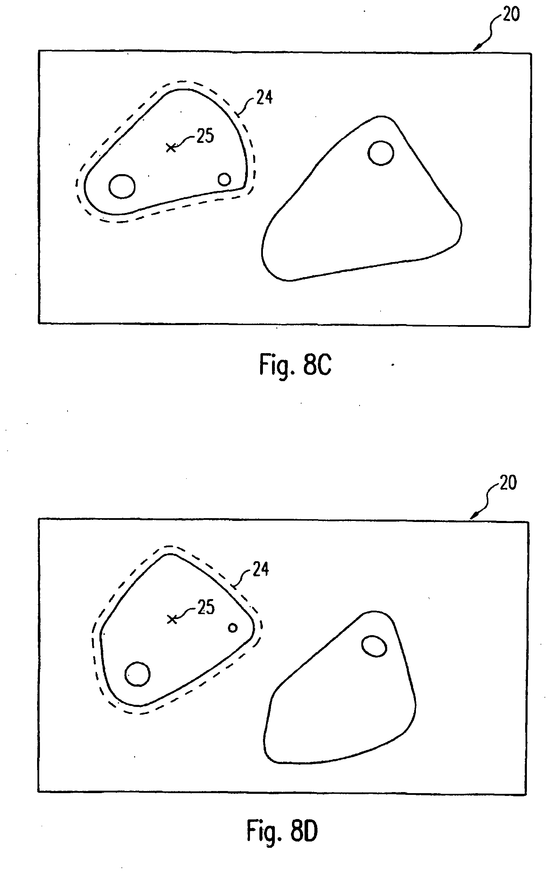

Die Fig. 8A, 8B, 8C und 8D zeigen jeweils eine Abbildung 20 eines Schnitts 40 der in Fig. 6 dargestellten Art. Im Folgenden soll anhand dieser Abbildungen 20 die Vorgehensweise zum Identifizieren der wiederkehrenden Strukturen beispielhaft erläutert werden.

Es ist erkennbar, dass sich in den Abbildungen 20 auf der linken Seite eine Struktur befindet, welche darin befindlich zwei weitere Strukturen aufweist. Diese Strukturen können somit bezüglich der sie umfassenden Struktur einer untergeordneten Hierarchieebene zugeordnet werden. Zum Auswerten der Abbildungen 20 wird nun ein Regelsatz verwendet, welcher erkennt, dass eine Struktur mit darin enthaltenen kleineren runden Strukturen in jeder der Abbildungen 20 vorhanden ist. Ferner ist lediglich eine solche Struktur vorhanden, so dass diese Strukturen der Abbildungen 20 einander eindeutig zugeordnet werden können.

Es ist ferner in den Fig. 8A und 8B erkennbar, dass weitere Strukturen in den Abbildungen 20 mittels einer Färbung hervorgehoben wurden. Es wurde dabei für die Abbildung 20 der Fig. 8A und die Abbildung 20 der Fig. 8B jeweils eine unterschiedliche selektive Färbung durchgeführt. Derartige selektive Farbstoffe sind in der Mikrobiologie wohlbekannt und können beispielsweise mittels Hämatoxylin/Eosin zur Färbung von Zellen und Zellkem durchgeführt werden. Eine solche Färbung wurde mit unterschiedlichen Farbstoffen für die in den Fig. 8A bzw. 8B dargestellten Abbildungen 20 durchgeführt. Es ergeben sich jeweils unterschiedliche Färbungen, welche Strukturen hervorheben, was in den Fig. 8A und 8B durch eine Schraffur verdeutlicht ist.

Das gezeigte Beispiel ist derart gewählt, dass anhand einer einzelnen Färbung eine Identifizierung von Strukturen noch nicht mit der erforderlichen statistischen Sicherheit möglich ist. Da jedoch aufgrund der wiederkehrenden Strukturen eine Zuordnung von Bereichen zwischen den einzelnen Schnitten 40 möglich ist, kann die zusätzliche Information, welche durch die selektive Färbung in den Abbildungen 20 der Fig. 8A und 8B gewonnen wird, kombiniert werden, um dadurch die statistische Sicherheit der Identifizierung von Strukturen deutlich zu erhöhen. Bei dem gezeigten Beispiel konnte die auf der linken Seite der Abbildungen 20 dargestellte Struktur mittels der durch Färbung hervorgehobenen Strukturen basierend auf einem dafür ausgestalteten Regelsatz in den Abbildungen der Fig. 8C und 8D als Arbeitsbereich ausgewählt werden.

Der ausgewählte Bereich ist in den Fig. 8C und 8D jeweils mit den dafür ermittelten geometrischen Kenngrößen in Form einer Schnittkurve 24 und einem Zielpunkt 25 dargestellt. Dieser Bereich kann nun wie bereits zuvor beschrieben entlang der Schnittkurve 24 aus der Masse herausgeschnitten werden und durch einen Laserschuss auf den Zielpunkt 25 zu der Auffangvorrichtung 2 katapultiert werden. Dies bedeutet, dass der zuvor als Arbeitsbereich ausgewählte Bereich insgesamt als Bereich zum Schneiden und/oder Katapultieren ausgewählt worden ist. Alternativ wäre es jedoch auch möglich gewesen, basierend auf dem anhand von Fig. 3 beschriebenen Verfahren innerhalb des Arbeitsbereichs einen oder mehrere Bereiche zum Schneiden und/oder Katapultieren auszuwählen. Dabei könnte es sich beispielsweise um die darin enthaltenen runden Strukturen handeln.

In den Fig. 8A, 8B, 8C und 8D ist erkennbar, dass sich zwischen den verschiedenen Schnitten 40 Veränderungen der darin enthaltenen Strukturen ergeben. Dies ist zum Teil darauf zurückzuführen, dass die Schnitte 40 in unterschiedlichen parallel verschobenen Schnittebenen vorgenommen werden. Da sich eine dreidimensionale Struktur der Masse in einer Richtung senkrecht zu den Schnittebenen typischerweise verändert, ergeben sich somit auch Veränderungen der Strukturen, welche durch diese dreidimensionale Struktur in den Schnitten hervorgerufen werden.

Weitere Veränderungen der Strukturen können jedoch daraus resultieren, dass sich beim Erzeugen der Schnitte 40 bzw. Anordnen der Schnitte 40 auf den Objektträgermitteln 30 Verschiebungen, Drehungen oder Verzerrungen der Masse ergeben. Zur Bearbeitung der Masse auf den unterschiedlichen Schnitten 40 ist es wünschenswert, diese Verschiebungen, Drehungen oder Verzerrungen zu korrigieren. Hierfür wird eine Transformationsmatrix ermittelt, welche Positionsangaben für einen der Schnitte 40 in Positionsangaben für einen anderen Schnitt 40 umsetzt und umgekehrt.

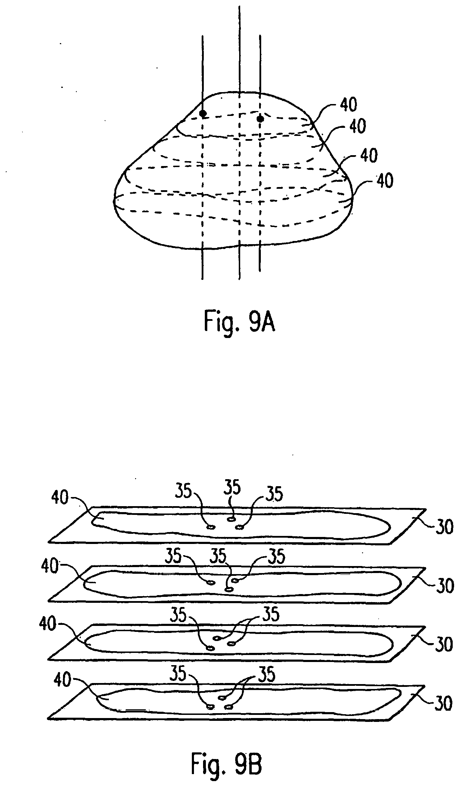

Eine Vorgehensweise, welche das Bestimmen der Transformationsmatrix ermöglicht, wird nun anhand der Fig. 9A und 9B erläutert. In der Fig. 9A ist schematisch eine perspektivische Darstellung einer biologischen Masse gezeigt. Es handelt sich dabei um eine dreidimensionale Struktur, z.B. eine Gewebeprobe. Wie durch die gestrichelten Linien angedeutet, werden aus der Masse parallel ausgerichtete Schnitte 40 von wenigen Mikrometer Dicke entnommen. Hierfür ist die Masse beispielsweise in einem Paraffinblock eingebettet oder als Kryopräparat gefroren.

Vor dem Erzeugen der Schnitte werden, wie es in der Fig. 9A schematisch dargestellt ist, in der Masse drei Lochbereiche herbeigeführt. Diese Lochbereiche erstrecken sich dann in einer Richtung, welche im Wesentlichen senkrecht zu der Ebene der durchzuführenden parallelen Schnitte 40 ausgerichtet ist. In der Ebene dieser Schnitte 40 definieren die Lochbereiche jeweils eine wohldefinierte geometrische Struktur, beispielsweise ein rechtwinkliges Dreieck.

Das Herbeiführen der Lochbereiche kann abhängig von der Art und Konsistenz der Masse auf verschiedene Weise durchgeführt werden, beispielsweise durch Stanzen, Einstechen oder Bohren. Insbesondere kann hierfür ein speziell angepasstes Werkzeug verwendet werden, welches diese Lochbereiche in einer wohldefinierten Geometrie erzeugen kann.

Die Fig. 9B zeigt in einer perspektivischen Darstellung Objektträgermittel 30 mit darauf angeordneten Schnitten 40, welche jeweils die auf die zuvor beschriebene Weise herbeigeführten Lochbereiche 35 aufweisen. Die Lochbereiche 35 definieren eine in jedem der Schnitte wiederkehrende Struktur. Diese wiederkehrende Struktur kann in der bereits zuvor beschriebenen Weise dazu verwendet werden, in Abbildungen der Schnitte Bereiche zu identifizieren, welche in der ursprünglichen, ungeteilten Masse zueinander benachbart waren. Mittels der Lochbereiche 35 ist dies auch möglich, wenn die Masse selbst keine Struktur aufweist, welche eine signifikante wiederkehrende Struktur in den Schnitten 40 hervorrufen würde.

Außerdem sind durch die drei Lochbereiche in den Schnitten 40 bzw. in den Abbildungen 20 davon jeweils drei Referenzpunkte definiert. Anhand dieser drei Referenzpunkte ist es möglich, zwischen den Abbildungen 20 von jeweils zwei Schnitten 40 die Transformationsmatrix zu definieren. Hierbei wird speziell ausgenutzt, dass die Lochbereiche 35 in den Schnittebenen der ursprünglichen, ungeteilten Masse eine wohldefinierte geometrische Struktur, z.B. ein rechtwinkliges Dreieck, definiert haben.

Es ist dabei speziell vorteilhaft, wenn die drei Lochbereiche 35 in der Masse so hervorgerufen werden, dass sich eine nicht rotationssysmmetrische Struktur, z.B. ein rechtwinkliges Dreieck, ergibt. Hierdurch ist es möglich, die Orientierung des Schnitts 40 in der Abbildung 20 relativ zu einer anderen der Abbildungen 20 eindeutig zu bestimmen.

Das Auffinden der Lochbereiche 35 bzw. Referenzpunkte erfolgt durch das zuvor beschriebene automatische Auswerten der Abbildungen 20 der Schnitte 40. In diesem Fall wird jedoch ein Regelsatz verwendet, welcher speziell für das Auffinden der Lochbereiche 35 angepasst ist. Es ist jedoch wiederum auch möglich, die Lochbereiche 35 manuell auszuwählen. Das Verwenden von Lochbereichen 35, um die wiederkehrende Struktur zu erzeugen bzw. die Referenzpunkte zu definieren, bietet dabei speziell den Vorteil, dass diese in den Abbildungen 20 typischerweise einen hohen Kontrast hervorrufen, und dadurch einfach zu identifizieren sind. Dies bedeutet, dass der zum Auffinden der Lochbereiche verwendete Regelsatz eine einfache Struktur aufweisen kann bzw. dass der Aufwand für den Benutzer, um diese Bereiche manuell auszuwählen, vergleichsweise gering ist.

In Fig. 10 ist ein Steuersystem schematisch in Form eines Blockdiagramms dargestellt. Das Steuersystem ist dabei speziell dafür geeignet, im Zusammenhang mit der zuvor beschriebenen Vorrichtung zur Bearbeitung der biologischen Masse die erläuterten Verfahrensschritte automatisch zu steuern. Das Steuersystem ist dabei über entsprechende Hardware- und/oder Softwaremodule in dem Computersystem 7 implementiert. Das Steuersystem umfasst Speichermittel 60, Bildverarbeitungsmittel 70 und Datenverarbeitungsmittel 80. Die Bildverarbeitungsmittel 70 und Datenverarbeitungsmittel 80 sind bei dem dargestellten Beispiel separat ausgeführt, können jedoch auch in einer gemeinsamen Funktionseinheit, beispielsweise einem Hauptprozessor des Computersystems 7 realisiert sein. Das Steuersystem umfasst Speichermittel 60, welche dazu dienen, darin die Abbildungen 20 in dem digitalen Format abzuspeichem. Ferner werden auch die im Rahmen der zuvor beschriebenen Verfahren ermittelten geometrischen Kenngrößen, beispielsweise die Schnittkurven 24 und Zielpunkte 25, in Form von Listen abgespeichert. Außerdem umfasst das Steuersystem Steuermittel 50, welche auf Basis der abgespeicherten geometrischen Kenngrößen Steuersignale erzeugen. Diese Steuersignale sind über entsprechende Schnittstellen der Auffangvorrichtung 2, dem Mikroskoptisch 3 und der Laservorrichtung 4 zugeführt. Außerdem ist das Steuersystem mit Abbildungsmittel-Schnittstellenmitteln versehen, so dass das Videosignal der Kamera des Mikroskops 1 aufgenommen werden kann und darauf basierend die Abbildungen 20 in dem für die weitere Auswertung geeigneten Format erzeugt werden können.

Es ist weiterhin möglich, die Bildverarbeitungsmittel 70 und/oder die Datenverarbeitungsmittel 80 extern bezüglich des Computersystems 7 anzuordnen, wobei speziell die Möglichkeit besteht, das Auswerten der Abbildungen 20 in einem separaten Computercluster durchzuführen, welches mit dem Computersystem über ein Netzwerk verbunden ist. Hierdurch kann das Auswerten der Abbildungen 20, welches vergleichsweise hohe Ressourcen erfordert, extern bewerkstelligt werden, so dass das Computersystem 7 entlastet wird, und somit für die Steuerfunktionen Ressourcen freigegeben werden.

## Patentansprüche

1. Verfahren zur Bearbeitung einer Masse,
wobei sich die Masse auf einem Träger (3) befindet, und
wobei durch Bestrahlung mit einem Laserstrahl die Masse geschnitten und/oder ein Objekt der Masse von dem Träger (3) zu einer Auffangvorrichtung (2) transferiert wird, umfassend die Schritte:
Erzeugen einer Abbildung (20) zumindest eines Teils der Masse auf dem Träger (3),
automatisches Auswerten der Abbildung (20), um in der Abbildung (20) vorgegebene Strukturen zu identifizieren,
automatisches Auswählen eines Bereichs der Abbildung (20) basierend auf den identifizierten Strukturen,
Bestimmen von geometrischen Kenngrößen (24, 25) des ausgewählten Bereichs, und
Erzeugen von Steuersignalen zum automatischen Schneiden der Masse und/oder Transferieren des Objekts basierend auf den geometrischen Kenngrößen (24, 25) des ausgewählten Bereichs,
wobei das Identifizieren von Strukturen in der Abbildung (20) basierend auf den Beziehungen der Strukturen untereinander erfolgt, wobei zunächst auf Basis von Kontrastinformationen der Abbildung (20) Strukturen identifiziert werden, wobei eine Hierarchie der Strukturen übergeordnete Strukturen definiert, welche untergeordnete Strukturen umfassen, und die Strukturen auf Basis der jeweils übergeordneten oder untergeordneten Strukturen anhand einer Regel identifiziert werden, welche vorsieht, dass die untergeordnete Struktur in der übergeordneten Struktur enthalten ist,
wobei die geometrischen Kenngrößen (24, 25) des Bereichs eine bezüglich des Trägers (3) definierte Umfangslinie des ausgewählten Bereichs und eine Schnittkurve (24) umfassen, welche basierend auf der Umfangslinie des ausgewählten Bereichs berechnet wird,
wobei die Schnittkurve (24) um mindestens einen vorbestimmten Abstand von der Umfangslinie des ausgewählten Bereichs beabstandet, welcher abhängig von den identifizierten Strukturen ausgewählt ist, und die Umfangslinie des ausgewählten Bereichs umschließt.

2. Verfahren nach Anspruch 1,
wobei das automatische Auswählen des Bereichs der Abbildung (20) basierend auf den in dem Bereich enthaltenen identifizierten Strukturen erfolgt.

3. Verfahren nach einem der vorhergehenden Ansprüche,
wobei das automatische Auswerten der Abbildung (20) anhand eines Regelsatzes (140, 140') erfolgt, welcher aus einer Gruppe von vorgegebenen Regelsätzen (140, 140') auswählbar ist.

4. Verfahren nach einem der vorhergehenden Ansprüche,
wobei die geometrischen Kenngrößen (24, 25) des Bereichs eine Position des ausgewählten Bereichs auf dem Träger (3) umfassen.

5. Verfahren nach einem der vorhergehenden Ansprüche,
wobei eine Verstellvorrichtung zum Herbeiführen einer Relativbewegung zwischen dem Träger (3) und dem Laserstrahl vorgesehen ist,
wobei die Verstellvorrichtung durch ein Verstell-Steuersignal angesteuert wird und verstellt wird, und
wobei das Verstell-Steuersignal der Verstellvorrichtung auf Basis der Schnittkurve (24) erzeugt wird, so dass der Laserstrahl bei dem automatischen Schneiden entlang der Schnittkurve (24) bewegt wird.

6. Verfahren nach Anspruch 5,
wobei die geometrischen Kenngrößen des ausgewählten Bereichs einen Zielpunkt (25) umfassen, und
wobei das Steuersignal der Verstellvorrichtung auf Basis dieses Zielpunkts (25) erzeugt wird, so dass der Laserstrahl zum automatischen Transferieren auf den Zielpunkt (25) gerichtet ist und bei anschließender Aktivierung des Laserstrahls durch ein entsprechendes Steuersignal das Objekt von dem Träger (3) zu der Auffangvorrichtung (2) transferiert wird.

7. Verfahren nach einem der vorhergehenden Ansprüche,
wobei das Erzeugen von Steuersignalen zum automatischen Schneiden der Masse und/oder Transferieren des Objekts ein automatisches Bestimmen von Steuerparametern einer Laserlichtquelle (4) zum Erzeugen des Laserstrahls umfasst.

8. Verfahren nach einem der vorhergehenden Ansprüche,
wobei die Masse auf einem Objektträgermittel (30) angeordnet wird, und wobei bei dem Erzeugen der Abbildung (20) im Wesentlichen das gesamte Objektträgermittel (30) abgebildet wird.

9. Verfahren nach einem der vorhergehenden Ansprüche,
wobei bei dem Erzeugen der Abbildung (20) mehrere Unterabbildungen (20', 20") zusammengesetzt werden, welche jeweils durch relatives Bewegen des Trägers (3) bezüglich eines Aufnahmemittels (18) der Abbildungsmittel (1) gewonnen werden.

10. Verfahren nach Anspruch 9,
wobei die Unterabbildungen (20") derart erzeugt werden, dass sich beim Zusammensetzen der Unterabbildungen (20") zu der Abbildung (20) mindestens ein Überlappbereich (21) zwischen den Unterabbildungen (20") bildet.

11. Verfahren nach Anspruch 10,
wobei in dem mindestens einen Überlappbereich (21) durch Auswerten der überlappenden Unterabbildungen (20") einander entsprechende Strukturen identifiziert werden, und
wobei die Unterabbildungen (20") beim Zusammensetzen anhand dieser Strukturen ausgerichtet werden.

12. Verfahren nach einem der vorhergehenden Ansprüche,
wobei nach dem automatischen Schneiden der Masse eine weitere Abbildung erzeugt wird,
wobei die weitere Abbildung (20) automatisch ausgewertet wird um darin eine vorgegebene Struktur in Form einer unvollständigen Schnittlinie um den ausgewählten Bereich zu identifizieren, und
wobei, falls eine unvollständige Schnittlinie identifiziert wurde, eine Schnittkurve (24) zum vervollständigen der unvollständigen Schnittlinie bestimmt wird, basierend auf welcher Steuersignale zum erneuten Schneiden der Masse erzeugt werden.

13. Verfahren nach einem der vorhergehenden Ansprüche,
wobei mehrere Bereiche automatisch ausgewählt werden,
wobei die geometrischen Kenngrößen (24, 25) jedes ausgewählten Bereichs abgespeichert werden, und
wobei die Steuersignale zum automatischen Schneiden der Masse und/oder Transferieren des Objekts jeweils basierend auf den gespeicherten geometrischen Kenngrößen (24, 25) der ausgewählten Bereiche erzeugt werden.

14. Verfahren nach einem der vorhergehenden Ansprüche,
wobei zusätzlich ein manuelles Auswählen von Bereichen möglich ist, und
wobei die geometrischen Kenngrößen (24, 25) der automatisch ausgewählten Bereiche in einem gleichen Format abgespeichert werden wie diejenigen der automatisch ausgewählten Bereiche.

15. Verfahren nach einem der Ansprüche 13 oder 14,
wobei die abgespeicherten geometrischen Kenngrößen (24, 25) bei dem automatischen Schneiden der Masse und/oder Transferieren des Objekts nacheinander in Form einer Liste abgearbeitet werden.

16. Verfahren nach einem der vorhergehenden Ansprüche, wobei die Masse in mehrere Teile aufgeteilt ist,
wobei das Verfahren die Schritte umfasst:
Erzeugen für jeden der Teile (40) der Masse jeweils einer Abbildung (20), automatisches Auswerten der Abbildungen (20), um in den Abbildungen (20) wiederkehrende Strukturen zu identifizieren,
automatisches Auswählen eines Bereichs der Abbildung (20) mindestens eines Teils (40) der Masse basierend auf den identifizierten Strukturen,
Schneiden der Masse in dem ausgewählten Bereich und/oder Transferieren des Objekts der Masse aus dem ausgewählten Bereich.

17. Verfahren nach Anspruch 16,
wobei das automatische Auswerten der Abbildungen (20), um in den Abbildungen (20) wiederkehrende Strukturen zu identifizieren, auf Basis von Kontrastinformationen der Abbildungen (20) erfolgt.

18. Verfahren nach Anspruch 16 oder 17,
wobei das Identifizieren der wiederkehrenden Strukturen in den Abbildungen (20) basierend auf den Beziehungen der Strukturen untereinander erfolgt.

19. Verfahren nach einem der Ansprüche 16-18,
wobei das automatische Auswerten der Abbildungen (20) anhand eines Regelsatzes (240, 240') erfolgt, welcher aus einer Gruppe von vorgegebenen Regelsätzen (240, 240') auswählbar ist.

20. Verfahren nach einem der Ansprüche 16-19,
wobei das automatische Auswählen des Bereichs in mindestens einer der Abbildungen (20) basierend auf den in dem Bereich enthaltenen identifizierten Strukturen erfolgt.

21. Verfahren nach einem der Ansprüche 15-19,
wobei für mindestens einen Teil (40) der Masse eine selektive Markierung von Strukturen erfolgt.

22. Verfahren nach Anspruch 21,
wobei die selektive Markierung durch einen Farbstoff erfolgt.

23. Verfahren nach Anspruch 21 oder 22,
wobei das Schneiden und/oder Transferieren des Objekts aus dem ausgewählten Bereich bei einem Teil (40) der Masse erfolgt, für welchen keine selektive Markierung von Strukturen vorgenommen wurde.

24. Verfahren nach einem der Ansprüche 16-23,
wobei geeignete Strukturen der Masse als die wiederkehrenden Strukturen verwendet werden.

25. Verfahren nach einem der Ansprüche 16-24,
wobei die Masse in mehrere im Wesentlichen parallele Schnitte (40) aufgeteilt wird, welche jeweils einen der Teile der Masse bilden.

26. Verfahren nach Anspruch 25,
wobei die Masse vor Erzeugen der parallelen Schnitte (40) mit einer Markierung (35) versehen wird, welche in jedem der Schnitte eine wiederkehrende Struktur hervorruft.

27. Verfahren nach Anspruch 26,
wobei die Markierung (35) durch drei Löcherbereiche, welche in einer sich im Wesentlichen senkrecht zu den Ebenen der parallelen Schnitte erstreckenden Richtung in der Masse herbeigeführt werden, vorgenommen wird.

28. Verfahren nach einem der Ansprüche 25-27,
wobei die wiederkehrenden Strukturen mindestens jeweils drei Positionen in mindestens zwei der Schnitte (40) definieren.

29. Verfahren nach Anspruch 28,
wobei anhand der mindestens drei Positionen in einem der Schnitte (40) Referenzpunkte bezüglich des Trägers (3) ermittelt werden, welche mit entsprechend ermittelten Referenzpunkten eines anderen der Schnitte (40) in Beziehung gesetzt werden, um eine Transformationsmatrix zu bestimmen, welche es ermöglicht, Positionsangaben des einen Schnittes (40) und Positionsangaben des anderen Schnittes (40) ineinander umzusetzen.

30. Verfahren nach Anspruch 29,
wobei die Transformationsmatrix Verschiebungen, Drehungen oder Verzerrungen der Schnitte (40) relativ zueinander berücksichtigt.

31. Verfahren nach einem der Ansprüche 16-30,
umfassend für mindestens einen der Teile (40) der Masse die Schritte:
automatisches Auswerten der Abbildung (20) dieses Teils der Masse, um in der Abbildung (20) vorgegebene Strukturen zu identifizieren,
automatisches Auswählen eines Bereichs abhängig von den identifizierten Strukturen,
Bestimmen von geometrischen Kenngrößen (24, 25) des ausgewählten Bereichs, und
Erzeugen von Steuersignalen zum automatischen Schneiden der Masse und/oder Transferieren des Objekts basierend auf den geometrischen Kenngrößen (24, 25) des ausgewählten Bereichs.

32. Steuersystem für eine Vorrichtung zur Bearbeitung einer Masse,
wobei die Vorrichtung eine Laserlichtquelle (4) zum Erzeugen eines Laserstrahls aufweist, um durch Bestrahlung mit dem Laserstrahl die Masse zu schneiden und/oder ein Objekt der Masse zu einer Auffangvorrichtung (2) zu transferieren,
wobei die Vorrichtung Abbildungsmittel (1) zum Erzeugen mindestens einer Abbildung (20) zumindest eines Teils der Masse umfasst, und
wobei das Steuersystem Steuermittel (50) zur automatischen Ansteuerung der Laserlichtquelle (4) und zur automatischen Ansteuerung von Verstellmitteln zur Herbeiführung einer Relativbewegung zwischen dem Laserstrahl und der Masse aufweist,
wobei das Steuersystem umfasst:
Bildverarbeitungsmittel (70) zum automatischen Auswerten der mindestens einen Abbildung, um darin Strukturen zu identifizieren, wobei das Identifizieren von Strukturen in der Abbildung (20) basierend auf den Beziehungen der Strukturen untereinander erfolgt, wobei eine Hierarchie der Strukturen mit übergeordneten Strukturen, welche untergeordnete Strukturen umfassen, definiert wird, und die Strukturen auf Basis der übergeordneten oder untergeordneten Strukturen anhand einer Regel identifiziert werden, welche vorsieht, dass die untergeordnete Struktur in der übergeordneten Struktur enthalten ist, und
Datenverarbeitungsmittel (80), welche dazu ausgestaltet sind, basierend auf den identifizierten Strukturen automatisch einen Bereich der Abbildung (20) auszuwählen und geometrische Kenngrößen des ausgewählten Bereichs der Abbildung (20) zu bestimmen,
wobei die geometrischen Kenngrößen (24, 25) des Bereichs eine bezüglich des Trägers (3) definierte Umfangslinie des ausgewählten Bereichs und eine Schnittkurve (24) umfassen, welche basierend auf der Umfangslinie des ausgewählten Bereichs berechnet wird,
wobei die Schnittkurve (24) um mindestens einen vorbestimmten Abstand, welcher abhängig von den identifizierten Strukturen ausgewählt ist, von der Umfangslinie des ausgewählten Bereichs beabstandet ist und die Umfangslinie des ausgewählten Bereichs umschließt,
wobei die Steuermittel (50) zum Erzeugen von Steuersignalen zum automatischen Schneiden der Masse und/oder Transferieren des Objekts basierend auf den geometrischen Kenngrößen des ausgewählten Bereichs der Abbildung (20) ausgestaltet sind.

33. Steuersystem nach Anspruch 32,
wobei die Masse in mehrere Teile aufgeteilt ist,
wobei die Vorrichtung Abbildungsmittel (1) zum Erzeugen jeweils einer Abbildung (20) für jeden der Teile (40) der Masse umfasst, und
wobei die Bildverarbeitungsmittel (70) dazu ausgestaltet sind, die Abbildungen (20) der Teile (40) automatisch auszuwerten, um darin wiederkehrende Strukturen zu identifizieren, und die Datenverarbeitungsmittel (80) dazu ausgestaltet sind, basierend auf den identifizierten Strukturen automatisch einen Bereich der Abbildung (20) auszuwählen.

34. Steuersystem nach Anspruch 32 oder 33,
wobei das Steuersystem zum Durchführen des Verfahrens nach einem der Ansprüche 1-31 ausgestaltet ist.

35. Vorrichtung zum Bearbeiten einer Masse mit einem Laserstrahl,
mit einer Laserlichtquelle (4) zum Erzeugen des Laserstrahls, um durch Bestrahlung mit dem Laserstrahl die Masse zu schneiden und/oder ein Objekt der Masse zu einer Auffangvorrichtung (2) zu transferieren,
mit Abbildungsmitteln (1) zum Erzeugen mindestens einer Abbildung (20) zumindest eines Teils der Masse, und
mit einem Steuersystem nach einem der Ansprüche 32-34.

36. Vorrichtung nach Anspruch 35,
wobei die Vorrichtung zum Durchführen des Verfahrens nach einem der Ansprüche 1-31 ausgestaltet ist.

37. Vorrichtung nach Anspruch 35 oder 36,
wobei die Vorrichtung ein Laser-Mikroskop-System ist.

38. Vorrichtung nach einem der Ansprüche 35-37,
wobei die Vorrichtung ein Laser-Mikrodissektionssystem ist.

39. Computerprogrammprodukt mit einem Programmcode,
welcher derart ausgestaltet ist, dass bei Verwendung in einem Computersystem (7) das Verfahren nach einem der Ansprüche 1-31 ausgeführt wird.

## Claims

1. Method for processing of a mass,
wherein the mass is located on a carrier (3), and
wherein, by irradiation of the mass with a laser beam, the mass is cut and/or an object of the mass is transferred from the carrier (3) to a collection device (2), comprising the steps:
generating an image (20) of at least a part of the mass on the carrier (3),
automatically evaluating the image (20) to identify predetermined structures in the image (20),
based on the identified structures, automatically selecting a region of the image (20),
determining geometric characteristics (24, 25) of the selected region, and
based on the geometric characteristics (24, 25) of the selected region, generating control signals for automatic cutting of the mass and/or transferring of the object,
wherein the identification of structures in the image (20) is accomplished on the basis of the relations of the structures to each other, wherein first structures are identified on the basis of contrast information of the image (20), wherein a hierarchy of the structures defines superordinate structures comprising subordinate structures, and the structures are identified on the basis of the respectively superordinate or subordinate structures by means of a rule providing for that the subordinate structure is contained in the superordinate structure,
wherein the geometric characteristics (24, 25) of the region comprise a peripheral line of the selected region defined with respect to the carrier (3) and a cutting curve (24) which is calculated based on the peripheral line of the selected region,
wherein the cutting curve (24) is spaced apart from the peripheral line of the selected region by at least a predetermined distance, which is selected depending on the identified structures, and encloses the peripheral line of the selected region.

2. Method according to claim 1,
wherein the automatic selecting of the region of the image (20) is accomplished on the basis of the identified structures included in the region.

3. Method according to any one of the preceding claims,
wherein the automatic evaluating of the image (20) is accomplished by means of a rule set (140, 140') which is selectable from a group of predetermined rule sets (140, 140').

4. Method according to any one of the preceding claims,
wherein the geometric characteristics (24, 25) of the region comprise a position of the selected region on the carrier (3).

5. Method according to any one of the preceding claims,
wherein a displacement device is provided for causing a relative movement of the carrier (3) and the laser beam,
wherein the displacement device is controlled and adjusted by a displacement control signal, and
wherein the displacement control signal of the displacement device is generated on the basis of the cutting curve (24), so that during the automatic cutting the laser beam is moved along the cutting curve (24).

6. Method according to claim 5,
wherein the geometric characteristics of the selected region comprise a target point (25), and
wherein the control signal of the displacement device is generated on the basis of this target point (25), so that for the automatic transferring the laser beam is directed at the target point (25) and, upon subsequent activation of the laser beam by a corresponding control signal, the object is transferred from the carrier (3) to the collection device (2) .

7. Method according to any one of the preceding claims,
wherein the generating of control signals for automatic cutting of the mass and/or transferring of the object comprises automatic determining of control parameters of a laser light source (4) for generating the laser beam.

8. Method according to any one of the preceding claims,
wherein the mass is arranged on an object holder means (30), and
wherein substantially the complete object holder means (30) is imaged when generating the image (20).

9. Method according to any one of the preceding claims,
wherein multiple subimages (20', 20") are combined when generating the image (20), each of which is obtained by relative movement of the carrier (3) with respect to a capturing means (18) of the imaging means (1).

10. Method according to claim 9,
wherein the subimages (20") are generated in such a way that, when combining the subimages (20") to the image (20), at least one overlap region (21) forms between the subimages (20").

11. Method according to claim 10,
wherein structures corresponding to each other are identified in the at least one overlap region (21) by evaluating of the overlapping subimages (20"), and wherein in the combining the subimages (20") are aligned on the basis of these structures.

12. Method according to any one of the preceding claims,
wherein after the automatic cutting of the mass a further image is generated,
wherein the further image (20) is automatically evaluated to identify therein a predetermined structure in the form of an incomplete cutting line around the selected region, and
wherein, if an incomplete cutting line was identified, a cutting curve (24) for completing the incomplete cutting line is determined, on the basis of which control signals for newly cutting the mass are generated.

13. Method according to any one of the preceding claims,
wherein multiple regions are automatically selected,
wherein the geometric characteristics (24, 25) of each selected region are stored, and
wherein the control signals for automatic cutting of the mass and/or transferring of the object are each generated based on the stored geometric characteristics (24, 25) of the selected regions.

14. Method according to any one of the preceding claims,
wherein additionally manual selecting of regions is possible, and
wherein the geometric characteristics (24, 25) of the automatically selected regions are stored in a same format as those of the automatically selected regions.

15. Method according to any one of claims 13 or 14,
wherein during the automatic cutting of the mass and/or transferring of the object stored geometric characteristics (24, 25) are subsequently processed in the form of a list.

16. Method according to any one of the preceding claims,
wherein the mass is divided into multiple parts,
wherein the method comprises the steps:
for each of the parts (40) of the mass, generating a corresponding image (20),
automatically evaluating the images (20) to identify reoccurring structures in the images (20),
based on the identified structures, automatically selecting a region of the image (20) of at least one part (40) of the mass,
cutting the mass in the selected region and/or transferring of the object of the mass from the selected region.

17. Method according to claim 16,
wherein the automatic evaluating of the images (20) to identify reoccurring structures in the images (20) is accomplished on the basis of contrast information of the images (20).

18. Method according to claim 16 or 17,
wherein the identifying of the reoccurring structures in the images (20) is accomplished based on the relations of the structures to each other.

19. Method according to any one of claims 16-18,
wherein the automatic evaluating of the images (20) is accomplished by means of a rule set (240, 240') which is selectable from a group of predetermined rule sets (240, 240').

20. Method according to any one of claims 16-19,
wherein the automatic selecting of the region in at least one of the images (20) is accomplished based on the structures included in the region.

21. Method according to any one of claims 15-19,
wherein a selective marking of structures is performed for at least one part (40) of the mass.

22. Method according to claim 21,
wherein the selective marking is accomplished by a dye.

23. Method according to claim 21 or 22,
wherein the cutting and/or transferring of the object from the selected region is accomplished in a part (40) of the mass for which no selective marking of structures was performed.

24. Method according to any one of claims 16-23,
wherein appropriate structures of the mass are used as the reoccurring structures.

25. Method according to any one of claims 16-24,
wherein the mass is divided into substantially multiple parallel sections (40) which respectively form one of the parts of the mass.

26. Method according to claim 25,
wherein before generating the parallel sections (40) the mass is provided with a marking (35) which generates a reoccurring structure in each of the sections.

27. Method according to claim 26,
wherein the marking (35) is accomplished by three hole regions which are formed in the mass in a direction extending substantially perpendicular to the planes of the parallel sections.

28. Method according to any one of claims 25-27,
wherein the reoccurring structures each define at least three positions in at least two of the sections (40).

29. Method according to claim 28,
wherein based on the at least three positions in one of the sections (40) reference points with respect to the carrier (3) are determined, which are related to correspondingly determined reference points of another one of the sections (40) to determine a transformation matrix which enables translating position information of the one section (40) and position information of the other section (40) to each other.

30. Method according to claim 29,
wherein the transformation matrix considers displacements, rotations or distortions of the sections (40) relative to each other.

31. Method according to any one of claims 16-30, comprising, for at least one of the parts (40) of the mass, the steps:
automatically evaluating the image (20) of this part of the mass to identify predetermined structures in the image (20),
depending on the identified structures, automatically selecting a region,
determining geometric characteristics (24, 25) of the selected region, and
based on the geometric characteristics (24, 25) of the selected region, generating control signals for automatically cutting the mass and/or transferring the object.

32. Control system for a device for processing a mass,
wherein the device comprises a laser light source (4) for generating a laser beam for cutting the mass and/or transferring an object of the mass to a collection device (2) by irradiation with the laser beam, wherein the device comprises imaging means (1) for generating at least one image (2) of at least a part of the mass, and
wherein the control system comprises control means (50) for automatically controlling the laser light source (4) and for automatically controlling displacement means for causing a relative movement of the laser beam and the mass,
wherein the control system comprises:
image processing means (70) for automatically evaluating the at least one image to identify structures therein,
wherein the identification of structures in the image (20) is accomplished based on the relations of the structures to each other, wherein a hierarchy of the structures with superordinate structures comprising subordinate structures is defined, and the structures are identified on the basis of the superordinate or subordinate structures by means of a rule providing for that the subordinate structure is contained in the superordinate structure, and
data processing means (80) which are configured to, based on the identified structures, automatically select a region of the image (20) and determine geometric characteristics of the selected region of the image (20),
wherein the geometric characteristics (24, 25) of the region comprise a peripheral line of the selected region defined with respect to the carrier (3) and a cutting curve (24) which is calculated based on the peripheral line of the selected region,
wherein the cutting curve (24) is spaced apart from the peripheral line of the selected region by at least a predetermined distance, which is selected depending on the identified structures, and encloses the peripheral line of the selected region,
wherein the control means (50) are configured to, based on the geometric characteristics of the selected region of the image (20), generate control signals for the automatic cutting of the mass and/or transferring the object.

33. Control system according to claim 32,
wherein the mass is divided into multiple parts,
wherein the device comprises imaging means (1) for generating a respective image (20) for each of the parts (40) of the mass, and
wherein the image processing means (70) are configured to automatically evaluate the images (20) of the parts (40) to identify reoccurring structures therein, and the data processing means (80) are configured to, based on the identified structures, automatically select a region of the image (20).

34. Control system according to claim 32 or 33,
wherein the control system is configured to perform the method according to any one of claims 1-31.

35. Device for processing a mass with a laser beam,
comprising a laser light source (4) for generating the laser beam, for cutting the mass and/or transferring an object of the mass to a collection device (2) by irradiation with the laser beam,
comprising imaging means (1) for generating at least one image (20) of at least a part of the mass, and
comprising a control system according to any one of claims 32-34.

36. Device according to claim 35,
wherein the device is configured to perform the method according to any of claims 1-31.

37. Device according to claim 35 or 36,
wherein the device is a laser microscopy system.

38. Device according to any one of claims 35-37,
wherein the device is a laser mirodissection system.

39. Computer program product comprising a program code,
which is configured in such a way that, when used in a computer system (7), the method according to any one of claims 1-31 is performed.

## Revendications

1. Procédé servant à traiter une matière,
sachant que la matière se trouve sur un support (3), et
sachant que la matière est coupée et/ou qu'un objet de la matière est transféré par le support (3) en direction d'un dispositif collecteur (2) par l'exposition à un rayon laser, comprenant les étapes suivantes consistant à:
produire une reproduction (20) d'au moins une partie de la matière sur le support (3),
analyser de manière automatique la reproduction (20) afin d'identifier des structures prédéfinies dans la reproduction (20),
sélectionner de manière automatique une zone de la reproduction (20) sur la base des structures identifiées,
déterminer des grandeurs caractéristiques (24, 25) géométriques de la zone sélectionnée, et
produire des signaux de commande servant à couper de manière automatique la matière et/ou transférer l'objet sur la base des grandeurs caractéristiques (24, 25) géométriques de la zone sélectionnée,
sachant que l'identification de structures dans la reproduction (20) se fait sur la base des liens des structures entre elles, sachant qu' au préalable des structures sont identifiées sur la base d'informations de contraste de la reproduction (20), sachant qu'une hiérarchie des structures définit des structures superordonnées comprenant des structures subordonnées, et les structures sont identifiées sur la base des structures respectivement superordonnées ou subordonnées à l'aide d'une règle prévoyant que la structure subordonnée est contenue dans la structure superordonnée,
sachant que les grandeurs caractéristiques (24, 25) géométriques de la zone comprennent une ligne périphérique, définie par rapport au support (3), de la zone sélectionnée, et une courbe de coupe (24), qui est calculée sur la base de la ligne périphérique de la zone sélectionnée,
sachant que la courbe de coupe (24) est tenue à distance de la ligne périphérique de la zone sélectionnée à au moins une distance prédéterminée, sélectionnée en fonction des structures identifiées, et renferme la ligne périphérique de la zone sélectionnée.

2. Procédé selon la revendication 1,
sachant que la sélection automatique de la zone de la reproduction (20) se fait sur la base des structures identifiées contenues dans la zone.

3. Procédé selon l'une quelconque des revendications précédentes,
sachant que l'analyse automatique de la reproduction (20) se fait à l'aide d'un kit de réglage (140, 140'), qui peut être sélectionné dans un groupe de kit de réglage (140, 140') prédéfinis.

4. Procédé selon l'une quelconque des revendications précédentes,
sachant que les grandeurs caractéristiques (24, 25) géométriques de la zone comprennent une position de la zone sélectionnée sur le support (3).

5. Procédé selon l'une quelconque des revendications précédentes,
sachant qu'un dispositif d'ajustement servant à provoquer un déplacement relatif est prévu entre le support (3) et le rayon laser,
sachant que le dispositif d'ajustement est commandé et ajusté par un signal de commande d'ajustement, et
sachant que le signal de commande d'ajustement du dispositif d'ajustement est produit sur la base de la courbe de coupe (24) de sorte que le rayon laser est déplacé lors du coupage automatique le long de la courbe de coupe (24).

6. Procédé selon la revendication 5,
sachant que les grandeurs caractéristiques géométriques de la zone sélectionnée comprennent un point cible (25), et
sachant que le signal de commande du dispositif d'ajustement est produit sur la base dudit point cible (25) de sorte que le rayon laser est orienté aux fins du transfert automatique sur le point cible (25) et que l'objet est transféré, lors de l'activation du rayon laser qui suit par un signal de commande correspondant, du support (3) en direction du dispositif collecteur (2).

7. Procédé selon l'une quelconque des revendications précédentes,
sachant que la production des signaux de commande servant au coupage automatique de la matière et/ou au transfert de l'objet comprend une détermination automatique de paramètres de commande d'une source de lumière laser (4) servant à produire le rayon laser.

8. Procédé selon l'une quelconque des revendications précédentes,
sachant que la matière est disposée sur un moyen de support d'objet (30), et
sachant que le moyen de support d'objet (30) est reproduit essentiellement en totalité lors de la production de la reproduction (20).

9. Procédé selon l'une quelconque des revendications précédentes,
sachant que sont rassemblées, lors de la production de la reproduction (20), plusieurs sous-reproductions (20', 20"), qui sont obtenues respectivement par un déplacement relatif du support (3) par rapport à un moyen de logement (18) des moyens de reproduction (1).

10. Procédé selon la revendication 9,
sachant que les sous-reproductions (20") sont produites de telle manière qu'au moins une zone de chevauchement (21) entre les sous-reproductions (20") se forme lors du rassemblement des sous-reproductions (20") pour obtenir la reproduction (20).

11. Procédé selon la revendication 10,
sachant que des structures correspondant les unes aux autres sont identifiées dans la zone de chevauchement (21) au moins au nombre de une par l'analyse des sous-reproductions (20") se chevauchant, et
sachant que les sous-reproductions (20") sont orientées lors du rassemblement à l'aide desdites structures.

12. Procédé selon l'une quelconque des revendications précédentes,
sachant qu'une autre reproduction est produite après le coupage automatique de la matière,
sachant que l'autre reproduction (20) est analysée de manière automatique afin d'y identifier une structure prédéfinie sous la forme d'une ligne de coupe incomplète autour de la zone sélectionnée, et
sachant que, si une ligne de coupe incomplète a été identifiée, une courbe de coupe (24) est déterminée afin de compléter la ligne de coupe incomplète, sur la base de laquelle signaux de commande sont produits afin de couper à nouveau la matière.

13. Procédé selon l'une quelconque des revendications précédentes,
sachant que plusieurs zones sont sélectionnées de manière automatique,
sachant que les grandeurs caractéristiques (24, 25) géométriques de chaque zone sélectionnée sont enregistrées, et
sachant que les signaux de commande sont produits afin de couper de manière automatique la matière et/ou de transférer l'objet respectivement sur la base des grandeurs caractéristiques (24, 25) géométriques mémorisées des zones sélectionnées.

14. Procédé selon l'une quelconque des revendications précédentes,
sachant qu'en supplément une sélection manuelle de zones est possible, et
sachant que les grandeurs caractéristiques (24, 25) géométriques des zones sélectionnées de manière automatique sont enregistrées sous un format identique à celui précisément des zones sélectionnées de manière automatique.

15. Procédé selon l'une quelconque des revendications 13 ou 14,
sachant que les grandeurs caractéristiques (24, 25) géométriques enregistrées sont traitées les unes après les autres sous la forme d'une liste lors de la coupe automatique de la matière et/ou lors du transfert de l'objet.

16. Procédé selon l'une quelconque des revendications précédentes, sachant que la matière est divisée en plusieurs parties,
sachant que le procédé comprend les étapes suivantes consistant à:
produire pour chacune des parties (40) de la matière respectivement une reproduction (20),
analyser de manière automatique les reproductions (20) afin d'identifier des structures récurrentes dans les reproductions (20),
sélectionner de manière automatique une zone de la reproduction (20) au moins d'une partie (40) de la matière sur la base des structures identifiées,
couper la matière dans la zone sélectionnée et/ou transférer l'objet de la matière hors de la zone sélectionnée.

17. Procédé selon la revendication 16,
sachant que l'analyse automatique des reproductions (20) afin d'identifier des structures récurrentes dans les reproductions (20) se fait sur la base d'informations de contraste des reproductions (20).

18. Procédé selon la revendication 16 ou 17,
sachant que l'identification des structures récurrentes dans les reproductions (20) se fait sur la base des liens des structures entre elles.

19. Procédé selon l'une quelconque des revendications 16 à 18,
sachant que l'analyse automatique des reproductions (20) se fait à l'aide d'un kit de réglage (240, 240'), qui peut être sélectionné dans un groupe de kits de réglage (240, 240') prédéfini.

20. Procédé selon l'une quelconque des revendications 16 à 19,
sachant que la sélection automatique de la zone dans au moins une des reproductions (20) se fait sur la base des structures identifiées contenues dans la zone.

21. Procédé selon l'une quelconque des revendications 16 à 19,
sachant qu'un marquage au choix de structures se fait pour au moins une partie (40) de la matière.

22. Procédé selon la revendication 21,
sachant que le marquage au choix se fait par une couleur.

23. Procédé selon la revendication 21 ou 22,
sachant que la coupe et/ou le transfert de l'objet hors de la zone sélectionnée se fait pour une partie (40) de la matière, pour laquelle aucun marquage au choix de structures n'a été entrepris.

24. Procédé selon l'une quelconque des revendications 16 à 23,
sachant que des structures appropriées de la matière sont utilisées en tant que structures récurrentes.

25. Procédé selon l'une quelconque des revendications 16 à 24,
sachant que la matière est divisée en plusieurs coupes (40) essentiellement parallèles, lesquelles forment respectivement une des parties de la matière.

26. Procédé selon la revendication 25,
sachant que la matière est pourvue, avant la production de coupes (40) parallèles, d'un marquage (35), qui entraîne dans chacune des coupes une structure récurrente.

27. Procédé selon la revendication 26,
sachant que le marquage (35) est entrepris par trois zones à trous, qui sont provoquées dans la matière dans une première direction s'étendant essentiellement de manière perpendiculaire par rapport aux plans des coupes parallèles.

28. Procédé selon l'une quelconque des revendications 25 à 27,
sachant que les structures récurrentes définissent au moins respectivement trois positions dans au moins deux des coupes (40).

29. Procédé selon la revendication 28,
sachant que sont déterminés à l'aide des trois positions ou plus dans l'une des coupes (40), par rapport au support (3), des points de référence, qui sont mis en relation avec des points de référence déterminés de manière correspondante d'une autre des coupes (40) afin de déterminer une matrice de transformation, qui permet de combiner des indications de position d'une coupe (40) et des indications de position de l'autre coupe (40).

30. Procédé selon la revendication 29,
sachant que la matrice de transformation tient compte des déplacements, des rotations ou des déchirements des coupes (40) les unes par rapport aux autres.

31. Procédé selon l'une quelconque des revendications 16 à 30,
comprenant pour au moins une des parties (40) de la matière les étapes qui suivent consistant à:
analyser de manière automatique la reproduction (20) de ladite partie de la matière afin d'identifier des structures prédéfinies dans la reproduction (20);
sélectionner de manière automatique une zone en fonction des structures identifiées;
déterminer des grandeurs caractéristiques (24, 25) géométriques de la zone sélectionnée; et
produire des signaux de commande servant à couper de manière automatique la matière et/ou à transférer l'objet sur la base des grandeurs caractéristiques (24, 25) géométriques de la zone sélectionnée.

32. Système de commande pour un dispositif servant à traiter une matière,
sachant que le dispositif présente une source de lumière laser (4) servant à produire un rayon laser afin de couper la matière et/ou afin de transférer l'objet de la matière en direction d'un dispositif collecteur (2) par l'exposition au rayon laser,
sachant que le dispositif comprend des moyens de reproduction (1) servant à produire au moins une reproduction (20) d'au moins une partie de la matière, et
sachant que le système de commande présente des moyens de commande (50) servant à piloter de manière automatique la source de lumière laser (4) et servant à piloter de manière automatique des moyens d'ajustement afin de provoquer un déplacement relatif entre le rayon laser et la matière,
sachant que le système de commande comprend:
des moyens de traitement d'image (70) servant à analyser de manière automatique la reproduction au moins au nombre de une afin d'y identifier des structures, sachant que l'identification de structures dans la reproduction (20) se fait sur la base des liens des structures entre elles, sachant qu'une hiérarchie des structures avec des structures superordonnées comprenant des structures subordonnées est définie, et les structures sont identifiées sur la base des structures superordonnées ou subordonnées à l'aide d'une règle prévoyant que la structure subordonnée est contenue dans la structure superordonnée, et
des moyens de traitement de données (80) qui sont configurés afin de sélectionner de manière automatique une zone de la reproduction (20) sur la base des structures identifiées et afin de déterminer des grandeurs caractéristiques géométriques de la zone sélectionnée de la reproduction (20),
sachant que les grandeurs caractéristiques (24, 25) géométriques de la zone comprennent une ligne périphérique, définie par rapport au support (3), de la zone sélectionnée, et une courbe de coupe (24), qui est calculée sur la base de la ligne périphérique de la zone sélectionnée,
sachant que la courbe de coupe (24) est tenue à distance de la ligne périphérique de la zone sélectionnée à au moins une distance prédéterminée, sélectionnée en fonction des structures identifiées, et renferme la ligne périphérique de la zone sélectionnée,
sachant que les moyens de commande (50) sont configurés afin de produire des signaux de commande servant à couper de manière automatique la matière et/ou à transférer l'objet sur la base des grandeurs caractéristiques géométriques de la zone sélectionnée de la reproduction (20).

33. Système de commande selon la revendication 32,
sachant que la matière est divisée en plusieurs parties,
sachant que le dispositif comprend des moyens de reproduction (1) servant à produire respectivement une reproduction (20) pour chacune des parties (40) de la matière, et
sachant que les moyens de traitement d'image (70) sont configurés afin d'analyser de manière automatique les reproductions (20) des parties (40), afin d'y identifier des structures récurrentes et que les moyens de traitement de données (80) sont configurés afin de sélectionner de manière automatique une zone de la reproduction (20) sur la base des structures identifiées.

34. Système de commande selon la revendication 32 ou 33,
sachant que le système de commande est configuré afin de mettre en oeuvre le procédé selon l'une quelconque des revendications 1 à 31.

35. Dispositif servant à traiter une masse avec un rayon laser,
comprenant une source de lumière laser (4) servant à produire le rayon laser afin de couper la matière et/ou à transférer un objet de la matière en direction d'un dispositif collecteur (2) par l'exposition au rayon laser,
comprenant des moyens de reproduction (1) servant à produire au moins une reproduction (20) d'au moins une partie de la matière, et
comprenant un système de commande selon l'une quelconque des revendications 32 à 34.

36. Dispositif selon la revendication 35,
sachant que le dispositif est configuré aux fins de la mise en oeuvre du procédé selon l'une quelconque des revendications 1 à 31.

37. Dispositif selon la revendication 35 ou 36,
sachant que le dispositif est un système de microscope laser.

38. Dispositif selon l'une quelconque des revendications 35 à 37,
sachant que le dispositif est un système de microdissection laser.

39. Produit de programme informatique comprenant un code de programme,
qui est configuré de telle manière que dans le cadre de l'utilisation dans un système informatique (7), le procédé selon l'une quelconque des revendications 1 à 31 est exécuté.
